# EUROPEAN PATENT APPLICATION

(11) **EP 4 772 811 A1**
(43) Date of publication of application: **08.07.2026**
(21) Application number: 26150088.8
(22) Date of filing: 02.01.2026
(51) Int. Cl.: F25B 49/02, F04B 39/00

(54) **MUFFLER ASSEMBLIES FOR CLIMATE CONTROL SYSTEMS**

(30) Priority: 03.01.2025 US 202519009794
(71) Applicant: Trane International Inc., Davidson, NC 28036 (US)
(72) Inventor: NOVAK, Keith A, Davidson, North Carolina 28036 (US); ESPELIEN, Christopher, Davidson, North Carolina 28036 (US); SALESMAN, Aaron J, Davidson, North Carolina 28036 (US); BETTHAUSER, Torin A, Davidson, North Carolina 28036 (US); SCALA, Alberto, Davidson, North Carolina 28036 (US)
(74) Representative: Haseltine Lake Kempner LLP

(57) **Abstract**

A climate control system that includes a refrigerant compressor and a discharge line coupled to the refrigerant compressor is described. The climate control system further includes a muffler assembly in fluid communication with the discharge line. The muffler assembly can include an adjustable resonator that is in fluid communication with the discharge line, where the adjustable resonator has an adjustable internal volume. In addition, the climate control system includes a controller communicatively coupled to the adjustable resonator, wherein the controller is configured to adjust the adjustable internal volume of the adjustable resonator based at least in part on an operating speed of the refrigerant compressor to thereby attenuate a pressure pulsation in a flow of refrigerant emitted from the refrigerant compressor.

## Description

### CROSS-REFERENCE TO RELATED APPLICATIONS

Not applicable.

### BACKGROUND

A climate control system, such as a heating, air-conditioning, and ventilation (HVAC) system, may be used to condition the climate of an interior space. The interior space may be an interior space of a house, apartment, building, retail store, storage unit, office, refrigerator, freezer, vehicle, etc. Some climate control systems may exchange heat between the interior space and an outdoor ambient environment by use of a refrigerant. Specifically, the refrigerant may be circulated between a pair of heat exchangers so as to transfer heat between the interior space and the outdoor ambient environment via the refrigerant during operations. A compressor may be used to circulate the refrigerant during operation.

### BRIEF SUMMARY

The present disclosure includes, without limitation, the following examples.

One embodiment is a climate control system. The climate control system includes a refrigerant compressor and a discharge line coupled to the refrigerant compressor. The climate control system further includes a muffler assembly in fluid communication with the discharge line. The muffler assembly can include an adjustable resonator that is in fluid communication with the discharge line, where the adjustable resonator has an adjustable internal volume. In addition, the climate control system includes a controller communicatively coupled to the adjustable resonator, wherein the controller is configured to adjust the adjustable internal volume of the adjustable resonator based at least in part on an operating speed of the refrigerant compressor to thereby attenuate a pressure pulsation in a flow of refrigerant emitted from the refrigerant compressor.

One embodiment is a method that operates a refrigerant compressor of a climate control system to discharge refrigerant into a discharge line. The method further adjusts an adjustable volume of an adjustable resonator coupled to the discharge line based at least in part on an operating speed of the refrigerant compressor. The method additionally flows refrigerant into the adjustable volume from the discharge line to attenuate a pressure pulsation emitted into the discharge line from the refrigerant compressor.

Embodiments described herein comprise a combination of features and characteristics intended to address various shortcomings associated with certain prior devices, systems, and methods. The foregoing has outlined rather broadly the features and technical characteristics of the disclosed embodiments in order that the detailed description that follows may be better understood. The various characteristics and features described above, as well as others, will be readily apparent to those having ordinary skill in the art upon reading the following detailed description, and by referring to the accompanying drawings. It should be appreciated that this disclosure may be readily utilized as a basis for modifying or designing other structures for carrying out the same purposes as the disclosed embodiments. It should also be realized that such equivalent constructions do not depart from the spirit and scope of the principles disclosed herein.

### BRIEF DESCRIPTION OF THE DRAWINGS

For a detailed description of various embodiments, reference will now be made to the accompanying drawings in which:
FIG. 1 is a schematic diagram of a climate control system including a muffler assembly according to some embodiments disclosed herein;
FIG. 2 is a schematic, cross-sectional view of the muffler assembly of the climate control system of FIG. 1 according to some embodiments disclosed herein;
FIG. 3 is a schematic, cross-sectional view of an adjustable resonator that may comprise at least a portion of the muffler assembly of the climate control system according to some embodiments disclosed herein;
FIG. 4 is a schematic, cross-sectional view of an adjustable resonator that may comprise at least a portion of the muffler assembly of the climate control system according to some embodiments disclosed herein;
FIG. 5 is a cross-sectional view of a plurality of radial resonators that may comprise at least a portion of the muffler assembly of the climate control system of FIG. 1 according to some embodiments disclosed herein;
FIG. 6 is an enlarged cross-sectional view of a flange plate that may define one or more of the radial resonators of FIG. 5 according to some embodiments disclosed herein;
FIG. 7 is a cross-sectional view of a plurality of radial resonators that may comprise at least a portion of the muffler assembly of the climate control system of FIG. 1 according to some embodiments disclosed herein;
FIG. 8 is a perspective view of a plurality of radial resonators defined in a flange cap coupled to a discharge port of a compressor as at least a part of the muffler assembly of the climate control system of FIG. 1 according to some embodiments disclosed herein;
FIG. 9 is a cross-sectional view taken along section A-A in FIG. 8 according to some embodiments disclosed herein;
FIG. 10 is another cross-sectional view taken along section A-A in FIG. 8 according to some embodiments disclosed herein;
FIG. 11 is a perspective view of a plurality of radial resonators defined in a discharge port of a compressor as at least a part of the muffler assembly of the climate control system of FIG. 1 according to some embodiments disclosed herein;
FIG. 12 is a cross-sectional view taken along section B-B in FIG. 11 according to some embodiments disclosed herein;
FIG. 13 is a cross-sectional view of a plurality of radial resonators that may comprise at least a portion of the muffler assembly of the climate control system of FIG. 1 according to some embodiments disclosed herein;
FIG. 14 is a schematic view of another climate control system including a muffler assembly and operating in a cooling mode according to some embodiments disclosed herein; and
FIG. 15 is a schematic view of the climate control system of FIG. 14 operating in a heating mode according to some embodiments disclosed herein.

### DETAILED DESCRIPTION

A climate control system may circulate a refrigerant between a pair of heat exchangers via a refrigerant compressor (or more simply "compressor") to exchange heat between an interior space and an ambient environment. The ambient environment may be an outdoor ambient environment that at least partially surrounds the interior space (or a structure defining the interior space). During operation, the compressor may generate pressure pulsations that are conducted through one or more refrigerant lines of the climate control system with the flowing refrigerant. These pressure pulsations can result in excess vibrations of the refrigerant lines of the climate control system, which may in turn cause undesirable noise and potential failure (e.g., due to fatigue). In addition, the pressure pulsations may cause inefficiencies in the flow through the climate control system, which may negatively affect heat transfer rates during operations. Many climate control systems may include variable speed or multi-speed compressors that are operated at a plurality of different operating speeds. Different operating speeds of the compressor may induce pressure pulsations having different frequencies. Thus, there is a desire for systems to attenuate or dampen pressure pulsations in the flow of refrigerant in a climate control system, particularly for climate control systems that utilize a variable speed or multi-speed compressor.

Accordingly, embodiments disclosed herein include muffler assemblies for a climate control system that are configured to attenuate pressure pulsations emitted from a refrigerant compressor over a range of operating speeds. In some embodiments, the muffler assemblies may include a plurality of resonators that are configured to attenuate pressure pulsations of different frequencies or frequency ranges. For instance, in some embodiments, a muffler assembly may include one or more of a plurality of radial resonators and/or one or more adjustable resonators that may allow pressure pulsations across a wider frequency range to be attenuated during operations. Thus, through use of the embodiments disclosed herein, a climate control system may more effectively attenuate pressure pulsations over a wider range of operating speeds of the refrigerant compressor.

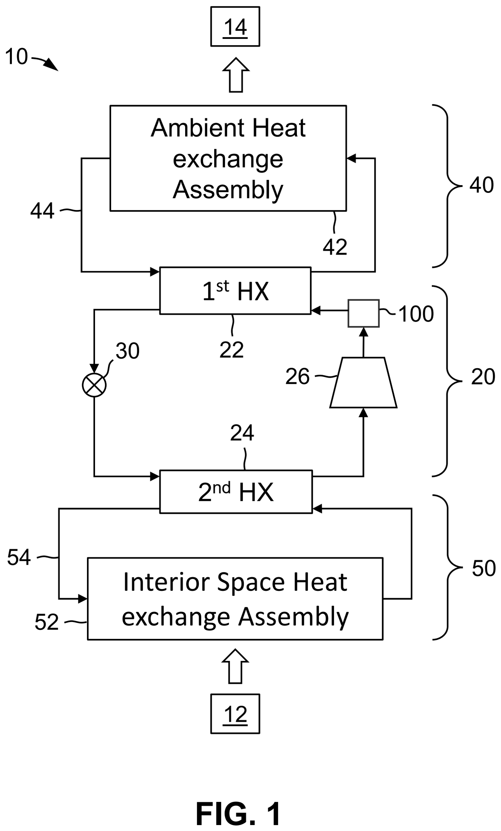

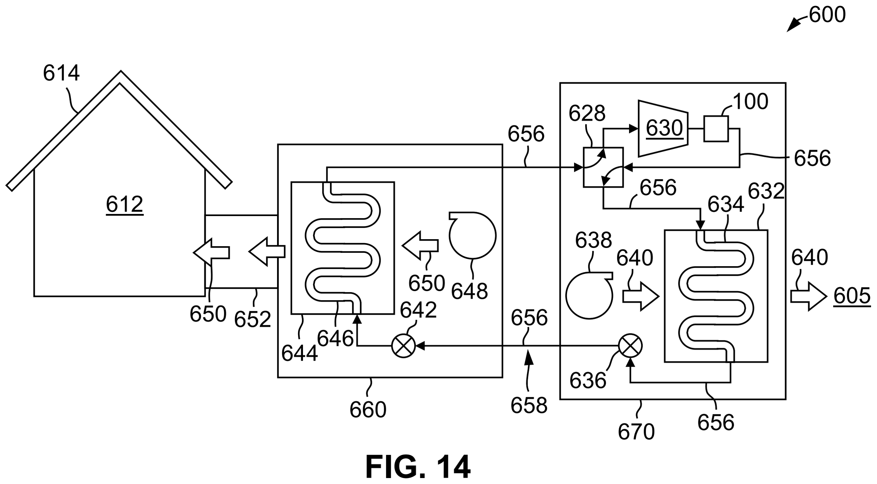

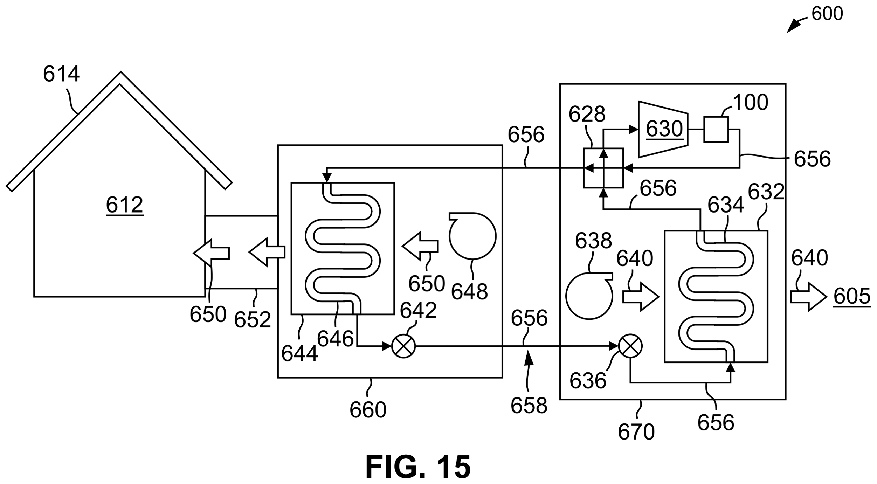

Referring now to FIG. 1, a climate control system 10 including a muffler assembly 100 is shown according to some embodiments disclosed herein. In the embodiment illustrated in FIG. 1, the climate control system 10 is configured as a chiller unit that is particularly configured to condition the interior space(s) of a large building (such as a commercial building, business, retail store, manufacturing facility, convention center, etc.). Thus, the climate control system 10 may be referred to herein as chiller unit 10 (or more simply a "chiller"). However, as will be described in more detail herein, embodiments of a muffler assembly 100 may also be utilized in a residential climate control system (for example, as shown in FIGS. 14 and 15 and described herein).

Generally speaking, the chiller 10 includes a refrigeration circuit 20 that is configured to circulate a refrigerant to exchange heat between the interior space(s) of the building 12 and an ambient environment 14 (e.g., such as the outdoor environment that surrounds the building 12), so as to cool the interior space(s). The refrigeration circuit 20 may include a first heat exchanger 22 and a second heat exchanger 24. The first heat exchanger 22 is configured to exchange heat between the refrigerant and a working fluid 44 of an ambient heat exchange assembly 42, and the second heat exchanger 24 is configured to exchange heat between the refrigerant and a working fluid 54 of an interior space heat exchange assembly 52.

The working fluid 54 may circulate between the second heat exchanger 24 of the refrigeration circuit 20 and the interior space heat exchange assembly 52 to exchange heat between the interior space(s) of building 12 and the refrigerant. Likewise, the working fluid 44 may circulate between the first heat exchanger 22 of the refrigeration circuit 20 and the ambient heat exchange assembly 42 to exchange heat between the refrigerant and the ambient environment 14.

In some embodiments, the ambient heat exchange assembly 42 comprises one or more heat exchangers (e.g., water cooling towers, radiators, fin-fan coolers, etc.) that are configured to transfer heat between the ambient environment 14 and the working fluid 44. In some embodiments, such as in the case of air-cooled chillers (described in more detail hereinafter), the ambient heat exchange assembly 42 may be integrated and combined with the first heat exchanger 22 so that heat is directly exchanged between the refrigerant and an airflow that is sourced from and provided back to the ambient environment. In some embodiments, the interior space heat exchange assembly 52 comprises one or more air handlers that are each configured to transfer heat between the working fluid 54 and an airflow that is then passed to the interior space(s) of the building 12.

The working fluids 44, 54 may comprise water or any other suitable aqueous mixture, such as a water-glycol mixture. Alternatively, the working fluid 44 may comprise air. When the working fluid 44 is water (or another aqueous mixture), the chiller 10 may be referred to as a "water-cooled" chiller, and when the working fluid 44 is air, the chiller 10 may be referred to as an "air-cooled" chiller.

In addition to the first heat exchanger 22 and the second heat exchanger 24, the refrigeration circuit 20 may include a compressor 26 (or one or more compressors 26 in some embodiments) and an expansion valve 30. The compressor 26 and expansion valve 30 may be in fluid communication with the first heat exchanger 22 and second heat exchanger 24 along the refrigerant circuit 20. During operations, the refrigeration circuit 20 may be operated to circulate the refrigerant in a first direction shown in FIG. 1 so as to transfer heat from the interior space(s) of building 12 (e.g., via the interior space heat exchange assembly 52) to the ambient environment 14 (e.g., via the ambient environment heat exchange assembly 42). Such operation may be referred to herein as a "cooling mode" operation.

Specifically, in the cooling mode operation shown in FIG. 1, the refrigerant (which may be in a vapor or semi-vapor state) may be compressed by the compressor 26 and delivered to the first heat exchanger 22 via the refrigerant circuit 20. Within the first heat exchanger 22, heat is transferred from the refrigerant to the working fluid 44, which cools the refrigerant and at least partially condenses the refrigerant to a liquid. Thus, in the cooling mode operation of FIG. 1, the first heat exchanger 22 may be referred to as a "condenser." Heat is then transferred from the heated working fluid 44 to the ambient environment 14 via the ambient heat exchange assembly 42 as previously described.

The condensed refrigerant is then expelled from the first heat exchanger 22 and flowed to the second heat exchanger 24 via the expansion valve 30. The expansion valve 30 may be positioned between the first heat exchanger 22 and second heat exchanger 24 along the refrigerant circuit 20. The expansion valve 30 may be actuated or configured so as to controllably expand and therefore cool the refrigerant upstream of the second heat exchanger 24.

The expanded and cooled refrigerant is then flowed to the second heat exchanger 24. Within the second heat exchanger 24, heat is transferred from the working fluid 54 to the refrigerant, which vaporizes (or at least partially vaporizes) the refrigerant. Thus, in the cooling mode operation of FIG. 1, the second heat exchanger 24 may be referred to as an "evaporator." The cooled working fluid 54 is then used to cool the interior space(s) of building 12 via the conditioned space heat exchange assembly 52 of the interior space heat exchange circuit 50 as previously described.

While not shown, in some embodiments, the refrigeration circuit 20 may circulate the refrigerant in a second, opposite direction than that shown in FIG. 1 so as to transfer heat from the ambient environment to the interior space(s) of building 12 via the ambient heat exchange assembly 42 and the interior space heat exchange assembly 52. Such operation may be referred to herein as a "heating mode" operation, and a refrigeration circuit 20 that is configured to operate in the heating mode may be referred to as a "heat pump." During a heating mode operation of the refrigeration circuit 20, the first heat exchanger 22 may function as an "evaporator" (which vaporizes the refrigerant) and the second heat exchanger 24 may function as a "condenser" (which condenses the refrigerant).

The operation of the chiller 10 may be adjusted so as to provide different output cooling (or heating) capacities to the working fluid 54 during operations. Specifically, the mass flow rate of refrigerant flowing along the refrigerant circuit 20 may be adjusted (e.g., via adjustments to the operating speed of the compressor 26 and corresponding adjustments to the opening position of the expansion valve 30) to thereby change the rate of thermal heat transfer between the refrigerant and the working fluid 54 during operations. In some embodiments, the chiller 10 may be operated at a lower output cooling capacity (e.g., by lowering the speed of the compressor 26) when the cooling demands of the interior space(s) of building 12 are lower.

Referring still to FIG. 1, during operations with the chiller 10, the compressor 26 may generate pressure pulsations that are then carried throughout the refrigerant circuit 20 via the flow of refrigerant. Because the compressor 26 may be operated at a plurality of different speeds, the pressure pulsations emitted by the compressor 26 may have a plurality of different frequencies. As previously described, the pressure pulsations emitted from the compressor 26 may increase the operating noise of the refrigerant circuit 20, and may even cause damage or failure of one or more components of the refrigerant circuit 20 (or positioned adjacent thereto). Thus, the chiller 10 includes the muffler assembly 100 to at least partially attenuate pressure pulsations emitted from the compressor 26. In some embodiments, the muffler assembly 100 may include one or more resonators that together are configured to attenuate pressure pulsations at a plurality of different frequencies so as to reduce the negative effects of pressure pulsations across a range of operating speeds of the compressor 26.

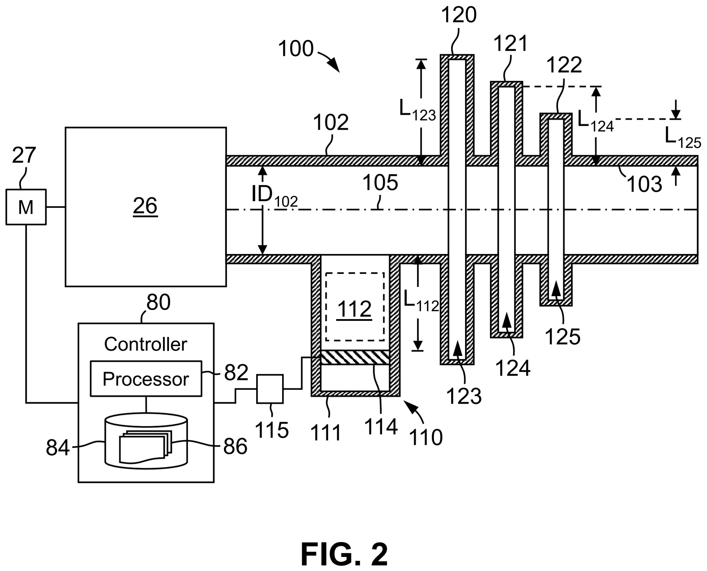

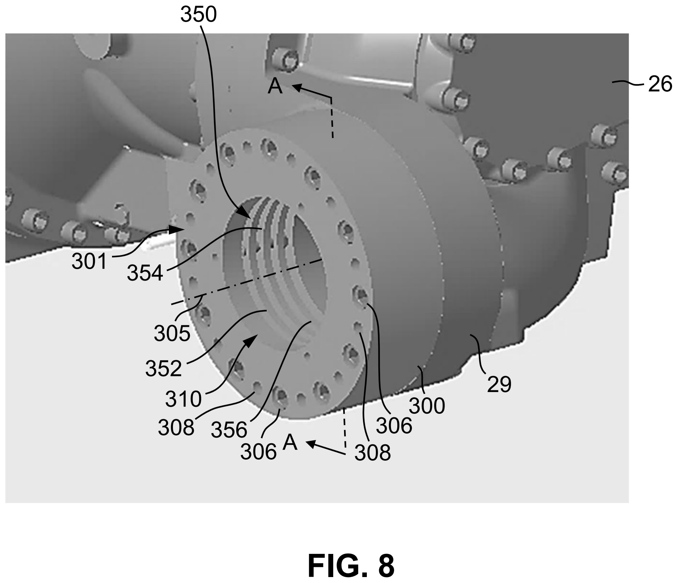

Referring now to FIG. 2, the muffler assembly 100 of climate control system 10 is shown according to some embodiments. The muffler assembly 100 may be coupled or positioned along a discharge flow path that is in fluid communication with the compressor 26. For instance, the discharge flow path may comprise a discharge line 102 that is in fluid communication with a discharge of the compressor 26. However, the discharge flow path may comprise another suitable flow path such as, for instance, a discharge port or assembly of the compressor 26 such as is shown in FIGS. 8-12 and described herein. Thus, the discharge line 102 may be configured to receive refrigerant that is discharged from the compressor 26 during operation of the chiller 10 (FIG. 1). The discharge line 102 may have an inner surface 103 (such as a cylindrical inner surface) that extends radially outward from a central or longitudinal axis 105 to an inner diameter ID₁₀₂.

In some embodiments, the muffler assembly 100 may be positioned along the discharge line 102 so that the muffler assembly 100 is downstream of the compressor 26 (FIG. 1) but upstream of a check valve (not shown) that may also be positioned along (or coupled to) discharge line 102. For instance, without being limited to this or any other theory, standing pressure waves may develop between the discharge of the compressor 26 and the muffler assembly 100 during operations. These standing pressure waves may be damaging or wear inducing to the check valve. As a result, positioning the muffler assembly 100 upstream of the check valve (not shown) may help to prevent these standing waves from contacting or interacting with the check valve during operations.

The muffler assembly 100 may include a plurality of resonators that are configured to at least partially attenuate pressure pulsations within a range (or multiple ranges) of frequencies. For instance, as shown in FIG. 1, the muffler assembly 100 may include an adjustable resonator 110 and one or more radial resonators 120, 121, 122.

In some embodiments, the adjustable resonator 110 and the radial resonator(s) 120, 121, 122 may be configured to attenuate pressure pulsations across a range of frequencies that correspond with an expected range of operating speeds for the compressor 26. For instance, in some embodiments, the radial resonator(s) 120, 121, 122 may be configured to attenuate pressure pulsations that are in a first portion of a range of frequencies for pressure pulsations that correspond to a range of operating speeds for the compressor 26. In addition, the adjustable resonator 110 may be configured to attenuate pressure pulsations across a plurality of frequencies that are in a second portion of the frequencies for pressure pulsations that correspond to the range of operating speeds for the compressor 26. The first portion of the range of frequencies may include greater (or higher) frequencies than the second portion of the range of frequencies. Thus, in some embodiments, the radial resonator(s) 120, 121, 122 may attenuate pressure pulsations having relatively high frequencies, and the adjustable resonator 110 may attenuate pressure pulsations having relatively low frequencies along the range of frequencies for pressure pulsations that correspond with the range of operating speeds for the compressor 26 during operation of the chiller 10 (FIG. 1).

Various embodiments of the adjustable resonator 110 and radial resonator(s) 120, 121, 122 will not be described in more detail. However, it should be appreciated that the muffler assembly 100 may comprise various selections and combinations adjustable resonator(s) and radial resonator(s) in various embodiments. For instance, in some embodiments, the muffler assembly 100 may comprise one or more adjustable resonators 110, one or more radial resonators 120, 121, 122, or various combinations of adjustable resonator(s) 110, and radial resonator(s) 120, 121, 122.

### {Adjustable Resonator 110 - General}

Referring still to FIG. 2, the adjustable resonator 110 may comprise a body 111 that is coupled to (or integrated) with the discharge line 102. Specifically, in some embodiments, the body 111 may comprise a cylindrical body that extends radially outward from the inner diameter ID₁₀₂ of discharge line 102 relative to a central or longitudinal axis 105 of the discharge line 102. However, other shapes are contemplated for the body 111 in various embodiments (e.g., rectangular parallelepiped).

The body 111 may define an internal volume 112 that is in fluid communication with the refrigerant flowing in the discharge line 102. Thus, the internal volume 112 (and also, potentially, the body 111) may extend radially (or perpendicularly) outward from the inner diameter ID₁₀₂ of discharge line 102 relative to longitudinal axis 105. However, in some embodiments, the internal volume 112 may extend at a non-zero angle that is different from 90° relative to the longitudinal axis 105. For instance, in some embodiments, the internal volume 112 may extend outward from the inner diameter ID₁₀₂ of discharge line 102 at an acute angle (that is, less than 90°).

A movable member 114 is positioned in the body 111 so that the internal volume 112 is defined between (such as a radially between) the movable member 114 and the inner surface 103 of discharge line 102. During operations, the movable member 114 may be moved within the body 111 so as to selectively adjust the size of the internal volume 112.

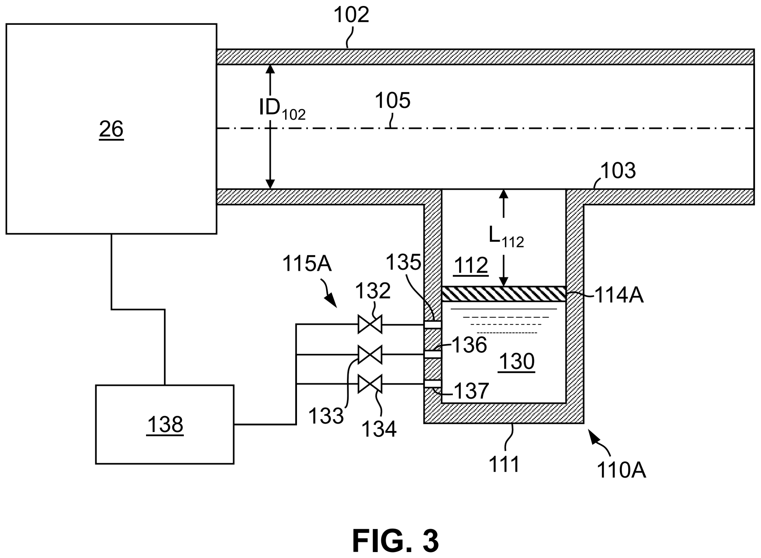

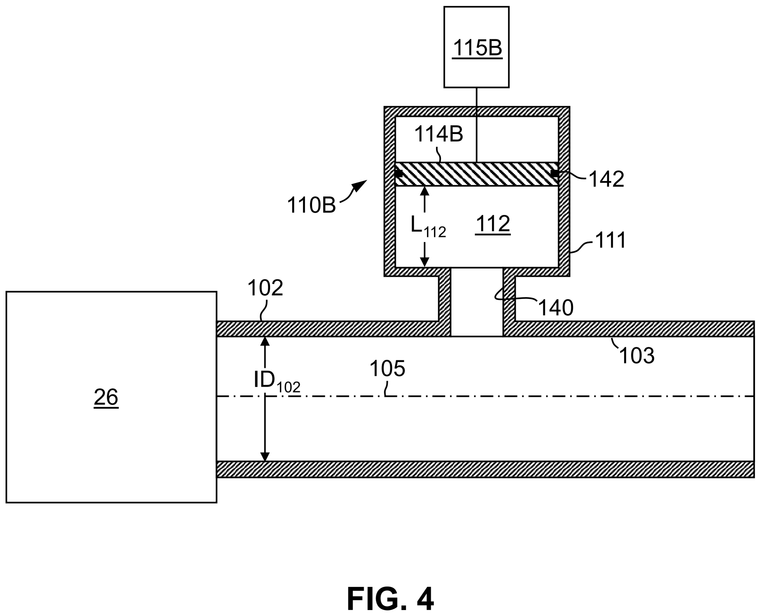

Without being limited to this or any other theory, adjusting the position of the movable member 114 and thus the size of the internal volume 112 may adjust the frequency of pressure pulsations that are attenuated by the adjustable resonator 110 during operations. As will be described in more detail herein, the adjustable resonator 110 may be configured as a quarter wave resonator as shown in FIG. 3 or as a so-called "Helmholz" resonator as shown in FIG. 4. A primary difference between the quarter-wave resonator and the Helmholtz resonator configurations is that a quarter wave resonator configuration (FIG 3) directly communicates the internal volume 112 with the refrigerant flowing through the discharge line 102, and the Helmholtz resonator configuration (FIG. 4) communicates the internal volume 112 with the refrigerant flowing through the discharge line 102 via a constriction (such as a cylindrical constriction) 140. In either case (that is when the adjustable resonator 110 is configured as either a quarter wave resonator or a Helmholtz resonator), the frequency of pressure pulsations attenuated by the adjustable resonator 110 may be at least partially based on the size of the internal volume 112 and the speed of sound through the particular refrigerant (or refrigerant mixture).

Specifically, in some embodiments, the frequency of pressure pulsations attenuated by the adjustable resonator 110 may be inversely related to the length (such as the radial length) L₁₁₂ of the internal volume 112, and directly related to the speed of sound through the refrigerant (or refrigerant mixture). The length L₁₁₂ may be measured from the inner surface 103 to the movable member 114 in the case of a quarter-wave resonator (FIG. 3) or from the constriction 140 to the movable member 114 in the case of a Helmholtz resonator (FIG. 4). Thus, the frequency of pressure pulsations attenuated by the adjustable resonator 110 may decrease as the length L₁₁₂ increases, and the frequency of pressure pulsations attenuated by the adjustable resonator 110 may increase as the length L₁₁₂ decreases.

An adjustment assembly 115 may be coupled to the movable member 114. During operations, the adjustment assembly 115 may actuate the movable member 114 so as to adjust the length L₁₁₂ and therefore the size of the internal volume 112 of the adjustable resonator 110. As will be described in more detail herein, the adjustment assembly 115 may comprise any suitable system for adjusting a position of the movable member 114. For instance, as will be described in more detail herein, the adjustment assembly 115 may comprise one or more linear actuators (hydraulic, pneumatic, electrical actuator(s)), fluid flow assemblies (including one or more valves), motors (including electric motors, hydraulic motors, pneumatic motors, etc.), among other examples.

A controller 80 may be communicatively coupled to the adjustment assembly 115. During operations, the controller 80 may output suitable commands or signals to the adjustment assembly 115 (or select components thereof) so as to selectively adjust a position of the movable member 114 to adjust the length L₁₁₂ and therefore the frequency of pressure pulsation attenuation for the adjustable resonator 110.

The controller 80 may be (or may be incorporated within) a main or master controller for the chiller 10 (FIG. 1). Alternatively, the controller 80 may be a standalone controller 80 for controlling adjustable resonator 110. Regardless, the controller 80 may be described and referred to herein as being a part of the chiller 10 (FIG. 1) according to at least some embodiments.

The controller 80 may comprise one or more computing devices, such as a computer, tablet, smartphone, server, circuit board, or other computing device(s) or system(s). Thus, controller 80 may include a processor 82 and a memory 84.

The processor 82 may include any suitable processing device or a collection of processing devices. In some embodiments, the processor 82 may include a microcontroller, central processing unit (CPU), graphics processing unit (GPU), timing controller (TCON), scaler unit, or some combination thereof. During operations, the processor 82 executes machine-readable instructions (such as machine-readable instructions 86) stored on memory 84, thereby causing the processor 82 to perform some or all of the actions attributed herein to the controller 80. In general, processor 82 fetches, decodes, and executes instructions (e.g., machine-readable instructions 86). In addition, processor 82 may also perform other actions, such as, making determinations, detecting conditions or values, etc., and communicating signals. If processor 82 assists another component in performing a function, then processor 82 may be said to cause the component to perform the function.

The memory 84 may be any suitable device or collection of devices for storing digital information including data and machine-readable instructions (such as machine-readable instructions 86). For instance, the memory 84 may comprise volatile storage (such as random-access memory (RAM)), non-volatile storage (e.g., flash storage, read-only memory (ROM), etc.), or combinations of both volatile and non-volatile storage. Data read or written by the processor 82 when executing machine-readable instructions 86 can also be stored on memory 84. Memory 84 may comprise or include a "non-transitory machine-readable medium," where the term "non-transitory" does not include or encompass transitory propagating signals.

The processor 82 may include one processing device or a plurality of processing devices that are distributed within (or communicatively coupled to) controller 80 or more broadly within one or more of the chiller 10 (FIG. 1). Likewise, the memory 84 may include one memory device or a plurality of memory devices that are distributed within (or communicatively coupled to) controller 80 or more broadly within one or more of the chiller 10 (FIG. 1). Thus, the controller 80 may comprise a plurality of individual "controllers" distributed throughout the chiller 10 and that may be communicatively coupled to one another. In still some embodiments, the controller 80 may also comprise one or more "controllers" (including a processor and a memory as previously described) that are remotely positioned from one or more of the chiller 10.

During operations, the controller 80 may adjust the position of the movable member 114 via the actuation assembly 115 based on one or more other performance parameters of the chiller 10 (FIG. 1). For instance, in some embodiments, the controller 80 may adjust the position of the movable member 114 via the actuation assembly 115 based on an operating speed of the compressor 26. Specifically, the controller 80 may be communicatively coupled to a motor 27 (or a suitable sensor, encoder, controller, or other device that is coupled to or part of the motor 27), so that the controller 80 may receive or determine the operating speed of the motor 27 (and thus compressor 26) during operations. Based on the operating speed of the compressor 26, the controller 80 may adjust the position of the movable member 114 and thus the length L₁₁₂ of the internal volume 112 so as to adjust the frequency of pressure pulsations that are attenuated (or more effectively attenuated) by the adjustable resonator 110. For instance, as the operating speed of the compressor 26 increases, the frequency of pressure pulsations (and harmonics thereof) emitted from the compressor 26 into the refrigerant flowing in the discharge line 102 may generally increase, and as the operating speed of the compressor 26 decreases, the frequency of pressure pulsations emitted from the compressor 26 into the refrigerant flowing in the discharge line may generally decrease.

Thus, in some embodiments, over at least a portion of the operating speed range of the compressor 26, controller 80 may: (1) actuate the movable member 114 (via actuation assembly 115) to increase the length L₁₁₂ of internal volume 112 as the operating speed of the compressor 26 increases; and (2) actuate the movable member 114 (via actuation assembly 115) to decrease the length L₁₁₂ of internal volume 112 as the operating speed of the compressor decreases. The controller 80 may actuate the movable member 114 to adjust the length L₁₁₂ in response to other data, information, stimulus in various embodiments. For instance, a pressure sensor coupled to the compressor 26, discharge line 102, etc. may directly (or more directly) measure or detect a pressure pulsation, and the controller 80 may adjust the length L₁₁₂ via movable member 114 in response to an output signal from the sensor. In some embodiments, the controller 80 may adjust the length L₁₁₂ via the movable member 114 in response to a command from another controller (such as a general or master controller) of chiller 10 (FIG. 1). In some embodiments, the controller 80 may adjust the length L₁₁₂ via the movable member 114 via a command from a user (such as a technician for chiller 10).

Referring now to FIG. 3, an embodiment of the adjustable resonator 110 (identified as "adjustable resonator 110A" in FIG. 3 and in the text hereafter) coupled to the discharge line 102 according to some embodiments is shown. The adjustable resonator 110A may be configured as a quarter-wave resonator that lacks a constriction (e.g., constriction 140 in FIG. 4) between the discharge line 102 and the internal volume 112. However, in some embodiments, the adjustable resonator 110A of FIG. 3 may be configured as a Helmholtz resonator (such as shown in the embodiment of FIG. 4).

The adjustable resonator 110A may be configured and positioned along the discharge line 102 so that liquid lubricant 130 (such as oil) emitted from the compressor 26 into the discharge line 102 is collected in body 111. Specifically, in some embodiments, the adjustable resonator 110A may be positioned at a vertically lower side of the discharge line 102. For instance, the body 111 may extend radially outward from the discharge line 102 (relative to longitudinal axis 105) in a vertically downward direction in some embodiments. As liquid lubricant 130 (or more simply "lubricant") is emitted into the discharge line 102 from the compressor 26, gravity may pull the relatively heavy lubricant 130 downward toward the adjustable resonator 110A so that the lubricant 130 is collected therein during operations. In some embodiments, the adjustable resonator 110A may be positioned along an outer side of an elbow or turn so that centrifugal forces acting on the fluid flow may encourage lubricant 130 into the body 111 of adjustable resonator 110A during operations.

The lubricant 130 may be configured to lubricate and/or cool one or more components of the compressor 26 during operations. For instance, in some embodiments, the compressor 26 may comprise a screw compressor having a plurality of (e.g., two) rotors that cooperatively rotate to compress refrigerant. In such embodiments, the lubricant 130 may freely flow along and around the rotors so to transfer heat (e.g., heat resulting from compression of the refrigerant) away from the rotors during operations. In some embodiments, the lubricant 130 may be configured to lubricate one or more bearings, seals, or other suitable moving components of the compressor 26.

The movable member 114 may comprise a float 114A (or "floating barrier") that is configured to float on top of the collected lubricant 130 in the body 111. The internal volume 112 of the adjustable resonator 110A may extend from the top surface of the float 114A to the inner surface 103 of the discharge line 102. The float 114A may have a shape that generally conforms or corresponds to the cross-sectional area of the internal volume 112. For instance, in some embodiments, the cross-sectional area of the internal volume 112 is cylindrical, and thus, the float 114A may comprise a generally cylindrically shaped member. In addition, the float 114A may be sized and/or shaped so that lubricant 130 may advance below and past the float 114A so as to collect in the body 111 as previously described. For instance, an outer diameter of the float 114A may be slightly less than an inner diameter of the internal volume 112 and/or the float 114A may include one or more holes or ports that allow lubricant 130 may flow therethrough. The float 114A may comprise any suitable material or design that may allow the float 114A to float on top of the collected lubricant 130 during operations. For instance, the float 114A may comprise any material (or combination of materials) that include a density (or average or combined density) that is less than the density of the lubricant 130.

For the adjustable resonator 110A of FIG. 3, the adjustment assembly 115 may comprise one or more (including a plurality of) drain valves 115A including drain valves 132, 133, 134 that are configured to adjust a level of collected lubricant 130 in the body 111 and therefore the length L₁₁₂ of internal volume 112 as previously described. Specifically, the adjustable resonator 110A may include one or more (including a plurality of) drain ports 135, 136, 137. Each of the drain ports 135, 136, 137 may be in fluid communication with a corresponding one of the drain valves 132, 133, 134, respectively.

In addition, the drain port(s) 135, 136, 137 may be vertically spaced from one another along the body 111 of adjustable resonator 110A. Specifically, in the example of FIG. 3, the drain port 135 may be vertically higher than both the drain ports 136, 137, the drain port 137 may be vertically lower than both the drain ports 135, 136, and the drain port 136 may be vertically between the drain ports 135, 137. Thus, the drain port 135 may be referred to as an "upper drain port," the drain port 136 may be referred to as a "middle drain port," and the drain port 137 may be referred to as a "lower drain port."

The controller 80 shown in FIG. 2 may be communicatively coupled to the drain valves 132, 133, 134 (or actuators thereof). During operations, the controller 80 may selectively open or close the valves 132, 133, 134 so as to control the level of lubricant 130 in the body 111 of adjustable resonator 110A relative to the drain ports 135, 136, 137. For example, in the embodiment of FIG. 3, the controller 80 (FIG. 2) may close the drain valves 133, 134 and open the drain valve 132 so that the level of the lubricant 130 is up to upper drain port 135. As another example, in the embodiment of FIG. 3, the controller 80 (FIG. 2) may close the drain valve 134 and open the drain valves 133, 134 so that the level of the lubricant 130 is up to the middle drain port 136. In still another example, the controller 80 (FIG. 2) may open each of the drain valves 132, 133, 134 so that the level of the lubricant 130 is up to the lower drain port 137. Thus, the number of drain ports 135, 136, 137 and drain valves 132, 133, 134 may determine the number of liquid levels that the controller 80 may adjust the collected lubricant 130 to within the body 111 of adjustable resonator 110A. While the example of adjustable resonator 110A shown in FIG. 3 includes three (3) drain ports 135, 136, 137 and three (3) corresponding drain valves 132, 133, 134, it should be appreciated that other examples including less than three and more than three drain ports (and drain valves) are contemplated.

Thus, during operations, the controller 80 may selectively open or close the drain valves 132, 133, 134 so that the level of lubricant 130 collected and maintained within the body 111 of adjustable resonator 110A is adjusted so as to correspondingly adjust the length L₁₁₂ of the adjustable volume via a vertical movement of the float 114A. Thus, selective opening and closing of the drain valves 132, 133, 134 may adjust the frequency of pressure pulsation that is attenuated (or most effectively attenuated) by the adjustable resonator 110A during operations.

In some embodiments, the lubricant 130 that is drained out of the adjustable resonator 110A may be passed back to the compressor 26. For instance, as shown in FIG. 3, the lubricant 130 that is drained from the adjustable resonator 110A via one or more of the drain valves 132, 133, 134 may pass to a collector 138, which may comprise a suitable container, and then are passed back to the compressor 26 via any suitable manner (such as via a pump). In some embodiments, the lubricant 130 that is drained from the adjustable resonator 110A may first be filtered before passing back to the compressor 26.

As previously described, the adjustable resonator 110A may be configured as a quarter wave resonator. Thus, during operations as a pressure pulsation wave expands axially down the discharge line 102, a portion of the wave expands into the internal volume 112 of resonator 110A at the speed of sound and then reflects back toward the discharge line 102 off of the float 114A so as to re-combine with the pressure pulsation wave in an interference zone positioned in the discharge line 102, outside of the resonator 110A. However, the reflected wave traveling back into the discharge line 102 is 180° out of phase with the pressure pulsation wave traveling down the discharge line 102 so that when the reflected wave re-combines with the pressure pulsation wave in the interference zone, the pressure wave is attenuated.

In some embodiments, the frequency of pressure pulsations attenuated by the adjustable resonator 110A may correspond to the speed of sound through the refrigerant (or refrigerant mixture) divided by the effective length of the adjustable resonator 110. The effective length of the adjustable resonator 112 may extend radially (relative to axis 105) from the movable member 114 to the center of the interference zone in the discharge line 102, outside of resonator 110. The length L₁₁₂ of resonator 110A, while different from the effective length, may correspond to the effective length of the adjustable resonator 110 so that adjustments of the length L₁₁₂ may also result in corresponding adjustments to the effective length of the resonator 110A.

Referring now to FIG. 4, a first example of the adjustable resonator 110 (identified as "adjustable resonator 110B") coupled to the discharge line 102 according to some embodiments is shown. The adjustable resonator 110B may be configured as a Helmholtz resonator that includes a constriction 140 between the discharge line 102 and the internal volume 112. However, in some embodiments, the adjustable resonator 110B of FIG. 4 may be configured as a quarter-wave resonator (such as shown in the embodiment of FIG. 3).

When the adjustable resonator 110B is configured as a Helmholtz resonator (and thus includes the constriction 140) as previously described, the frequency of pressure pulsations attenuated by the adjustable resonator 110B may be at least partially dependent on a variety of parameters, such as the size of the internal volume 112, the cross-sectional area and length of the constriction 140, and the speed of sound through the refrigerant(s). Because the size of the constriction 140 and speed of sound through the refrigerant(s) is constant, the frequency of attenuation for the adjustable resonator 110B may be adjusted based on size of the internal volume 112, which is in turn dependent upon the length L₁₁₂. As previously described, the frequency of pressure pulsation that adjustable resonator 110B is configured to attenuate may decrease as the length L₁₁₂ increases, and may increase as the length decreases. The length L₁₁₂ may, in turn, be adjusted via adjustment of the position of movable member 114 as previously described.

The movable member 114 may comprise a piston 114B that is actuated within the body 111 of adjustable resonator 110B so as to adjust the length L₁₁₂. The length L₁₁₂ may extend from the piston 114B to the constriction 140. The piston 114B may include one or more seals 142 that are configured to sealingly engage with an inner wall of the body 111 to prevent (or at least restrict) the flow of refrigerant out of the internal volume 112 and around the piston 114B. The seal(s) 142 may include any suitable radial seal, such as an O-ring or seal ring.

The actuation assembly 115 may comprise a linear actuator 115B that is configured to controllably move the piston 114B within the body 111 of adjustable actuator 110B during operations. For instance, the linear actuator 115B may comprise a hydraulic cylinder, a pneumatic actuator, or an electric motor (such as a stepper motor, servo motor, etc.). The actuator 115B may be communicatively coupled to the controller 80 (FIG. 2), so that during operations, the controller 80 may actuate the piston 114B within the body 111 via the actuator 115B so as to selectively adjust the length L₁₁₂ of the adjustable resonator 110B during operations. Thus, selective opening actuation of the actuator 115B by the controller 80 may adjust the frequency of pressure pulsation that is attenuated (or most effectively attenuated) by the adjustable resonator 110B during operations.

In contrast to the adjustable resonator 110A shown in FIG. 3, the adjustable resonator 110B may be positioned so as to prevent (or at least restrict) the collection of liquid lubricant 130 (FIG. 3) into the body 111 during operations. Specifically, without being limited to this or any other theory, because the piston 114B is controllably moved via the linear actuator 115B, the collection of liquid lubricant 130 (FIG. 3) into the body 111 may induce unintentional and uncontrolled adjustments to the size of the internal volume 112. Thus, in some embodiments, the body 111 of the adjustable resonator 110B may be positioned along a vertically upper side of the discharge line 102 or along a radially inner side of a curve or elbow of the discharge line 102 so as to discourage collection of lubricant 130 into the body 111 during operations.

Referring again to FIG. 2, the radial resonator(s) 120, 121, 122 may each include a fixed volume 123, 124, 125, respectively, that extends radially outward and away from the inner surface 103 (and thus the inner diameter ID₁₀₂) relative to the longitudinal axis 105. In addition, the fixed volume 125, 126, 127 of each of the radial resonator(s) 120, 121, 122 may also extend circumferentially about the longitudinal axis 105. For instance, the fixed volume 123, 124, 125 of each of the radial resonator(s) 120, 121, 122 may each extend circumferentially over a full revolution (e.g., 360°) about the longitudinal axis 105.

In the embodiment of FIG. 2, the radial resonators 120, 121, 122 are configured and shaped as quarter wave resonators that lack a constriction as previously described. Thus, in the embodiment of FIG. 2, the fixed volumes 123, 124, 125 of the radial resonators 120, 121, 122 may each be substantially shaped as an annular disk about the central bore of discharge line 102. However, as described in more detail herein, one or more of the radial resonators 120, 121, 122 may be configured as a Helmholtz resonator having a fixed volume that includes a constriction at an inlet thereof as previously described. Thus, the depiction of the radial resonators 120, 121, 122 as quarter wave resonators is merely exemplary of some embodiments.

In addition, the fixed volume 123, 124, 125 of each of the radial resonators 120, 121, 122, respectively, may each have a different size so that each of the radial resonators 120, 121, 122 may attenuate (or most effectively attenuate) pressure pulsations of different frequencies during operations. More specifically, the fixed volumes 123, 124, 125 may each have a different radial length L₁₂₃, L₁₂₄, L₁₂₅, respectively, that measured radially outward from the inner diameter ID₁₀₂ and inner surface 103 of discharge line 102 to the radially extent of the fixed volume 123, 124, 125, respectively.

The radial length L₁₂₃ of radial resonator 120 may be greater than both the radial lengths L₁₂₄, L₁₂₅ of radial resonators 121, 122, respectively. In addition, the radial length L₁₂₅ may be less than both the radial lengths L₁₂₃, L₁₂₄ of the radial resonators 120, 121, respectively. Further, the radial length L₁₂₄ of radial resonator 121 may be greater than the radial length L₁₂₄ of radial resonator 122 and less than the radial length L₁₂₃ of radial resonator 120. Thus, because the radial lengths L₁₂₃, L₁₂₄, L₁₂₅ of radial resonators 120, 121, 122 are inversely related to the frequency of attenuated pressure pulsations, the radial resonator 120 (having radial length L₁₂₃) may attenuate (or most effectively attenuate) pressure pulsations having a first frequency, the radial resonator 121 (having radial length L₁₂₄) may attenuate (or most effectively attenuate) pressure pulsations having a second frequency that is greater than the first frequency, and the radial resonator 122 (having radial length L₁₂₅) may attenuate (or most effectively attenuate) pressure pulsations having a third frequency that is greater than both the first frequency and the second frequency.

While FIG. 2 shows a total of three (3) radial resonators 120, 121, 122 coupled to the discharge line 102, it should be appreciated that the muffler assembly 100 may include more or less than three (3) radial resonators 120, 121, 122 in other embodiments. For instance, in some embodiments the muffler assembly 100 may include a single radial resonator or more than three (3) radial resonators.

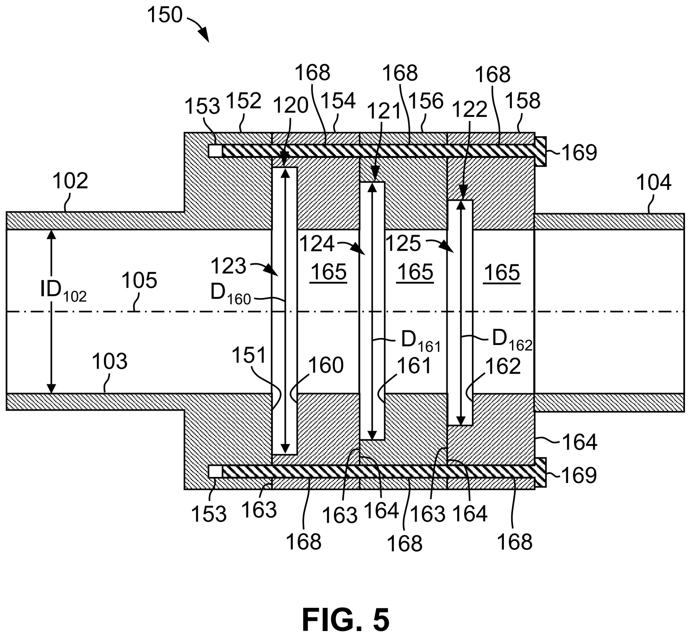

Referring now to FIG. 5, in some embodiments the radial resonators 120, 121, 122 may be formed or defined by plurality of stacked plates 152, 154, 156, 158. Specifically, the plurality of plates 152, 154, 156, 158 may comprise flange plates that are abutted against one another to form or define a stack 150 that is coupled to the discharge line 102.

A first flange plate 152 of the stack 150 may comprise a connector flange plate that is connected to or integrated with (e.g., welded, bolted, threaded, etc.) the discharge line 102. The first flange plate 152 may include a planar connector surface 151 that extends radially relative to the central axis 105 of discharge line 102, and a plurality of mounting holes (or apertures) 153 extending axially into the planar connectors surface 151.

Each of the other flange plates 154, 156 ,158 of the stack 150 may comprise disk-shaped members that are abutted against one another and against the planar connector surface 151 of the first flange plate 152. Each of the other flange plates 154, 156, 158 may include a cylindrical recess 160, 161, 162, respectively, that at least partially defines the fixed volumes 123, 124, 125, respectively, of the radial resonators 120, 121, 122, respectively, in the stack 150. Specifically, in the embodiment illustrated in FIG. 5, each of the radial resonators 120, 121, 122 may be defined between abutted pairs of the flange plates 152, 154, 156, 158 within the stack 150 as shown in FIG. 5 and described in more detail hereinafter.

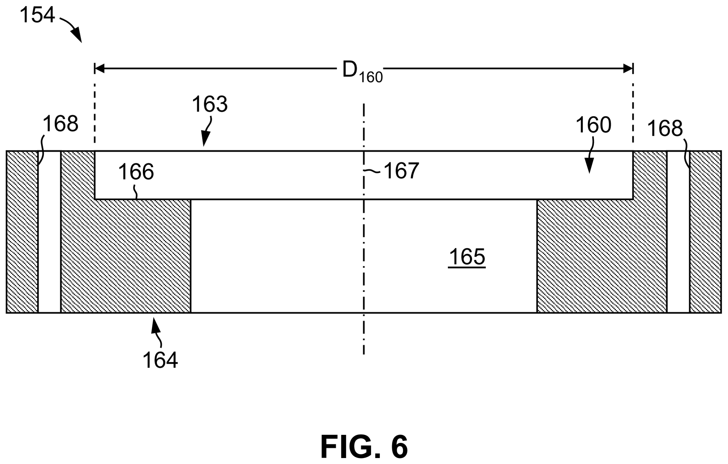

FIG. 6 shows a cross-sectional view of flange plate 154 is shown according to some embodiments. However, it should be appreciated that the flange plates 156, 158 are generally configured the same (with the exception of the size of the cylindrical recesses 161, 162 as described in more detail hereinafter). The flange plate 154 includes a central axis 167, a first planar side 163 (or "first side 163"), and a second planar side 164 (or "second side 164") spaced from and opposite the first side 163 along the central axis 167. The cylindrical recess 160 extends axially into the flange plate 154 from the first side 163 along the central axis 167, and a bore 165 extends axially from the cylindrical recess 160 to the second side 164 along the central axis 167. The inner diameter of the bore 165 is smaller than the inner diameter D₁₆₀ of the recess 160, so that an annular shoulder 166 is defined in the recess 160 at the intersection with bore 165. The inner diameter of the bore 165 may be generally equal to the inner diameter ID₁₀₂ of the discharge line 102.

The inner diameter D₁₆₀ may also define the radial length L₁₂₃ of the radial resonator 120 (FIG. 2) when the flange plate 154 is incorporated into the stack 150 as previously described (FIG. 5). Specifically, the difference between the inner diameter D₁₆₀ of cylindrical recess 160 and the inner diameter ID₁₀₂ of discharge line 102 may define the radial length L₁₂₃ of the radial resonator 120 (FIG. 2).

Referring still to FIG. 6, the flange plate 154 also includes a plurality of mounting holes (or apertures) 168 that are positioned radially outward of the recess 160 and bore 165 and that are circumferentially spaced about the central axis 167. The mounting holes 168 may generally align and correspond with the mounting holes 153 on the first flange plate 152 (FIG. 5).

Referring now to FIGS. 5 and 6, each of the flange plates 156, 158 may be configured the same as the flange plate 154. Thus, the flange plates 156, 158 may also have the central axis 167, sides 163, 164, bore 165, and mounting holes 168. However, the flange plates 156, 158 may include the cylindrical recesses 161, 162 in place of the cylindrical recess 160. Moreover, the cylindrical recesses 161, 162 may be generally similar to the cylindrical recess 160, except that the cylindrical recesses 161, 162 may have different inner diameters D₁₆₁, D₁₆₂ than the inner diameter D₁₆₀. Specifically, each of the inner diameters D₁₆₁, D₁₆₂ may be configured to at least partially define the fixed volumes 124, 125 of the radial resonators 121, 122, respectively, and thus may be smaller than the inner diameter D₁₆₀, so as to correspond with the lengths L₁₂₄, L₁₂₅ (FIG. 2) of the fixed volumes 124, 125, respectively.

Referring specifically to FIG. 5, the flange plates 152, 154, 156, 158 may be abutted against one another so that the central axes 167 (FIG. 6) of the flange plates 152, 154, 156, 158 are aligned with the longitudinal axis 105 of discharge line 102. Thus, the bores 165 of the flange plates 154, 156, 158 may be coaxially aligned with the bore defined by the inner surface 103 of discharge line 102 via the aligned axes 105, 167 (FIG. 6).

In addition, as shown in FIG. 5, the first side 163 of the flange plate 154 is abutted against the planar connector surface 151 of the first flange plate 152 so that the planar connector surface 151 and the cylindrical recess 160 may at least partially define the radial resonator 120. Similarly, as also shown in FIG. 5, the first side 163 of the flange plate 156 is abutted the second side 164 of the flange plate 154 so that the cylindrical recess 161 of flange plate 156 and the second planar side 164 of flange plate 154 at least partially define the radial resonator 121. Further, as also shown in FIG. 5, the first side 163 of the flange plate 158 may be abutted against the second side 164 of the flange plate 156 so that the cylindrical recess 162 of flange plate 158 and the second side 164 of flange plate 156 may at least partially define the radial resonator 122.

The mounting holes 168 of flange plates 154, 156, 158 may be radially and circumferentially aligned with one another and are radially and circumferentially aligned with the mounting holes 153 defined in the first flange plate 152. A plurality of elongate connector members 169, such as threaded bolts, screws, etc. may be inserted through the aligned mounting holes 168 and mounting holes 153 so as to secure the flange plates 152, 154, 156 ,158 to one another as shown. For instance, the elongate connector members 169 may comprise elongate screws that are inserted through the aligned mounting holes 168 and that are threadably engaged within the mounting holes 153 so as to axially compress the flange plates 152, 154, 156, 158 against one another along the longitudinal axis 105.

The second side 164 of the flange plate 158 may be coupled to or integrated with (e.g., welded, bolted, threaded, etc.) additional piping 104 that is configured to carry the refrigerant away from the compressor 26 and toward the first heat exchanger 22 within the refrigerant circuit 20 of chiller 10 (FIG. 1). Alternatively, the second side 164 of the flange plate 158 may be coupled to a separate connector flange that is coupled to or integrated with the additional piping 104.

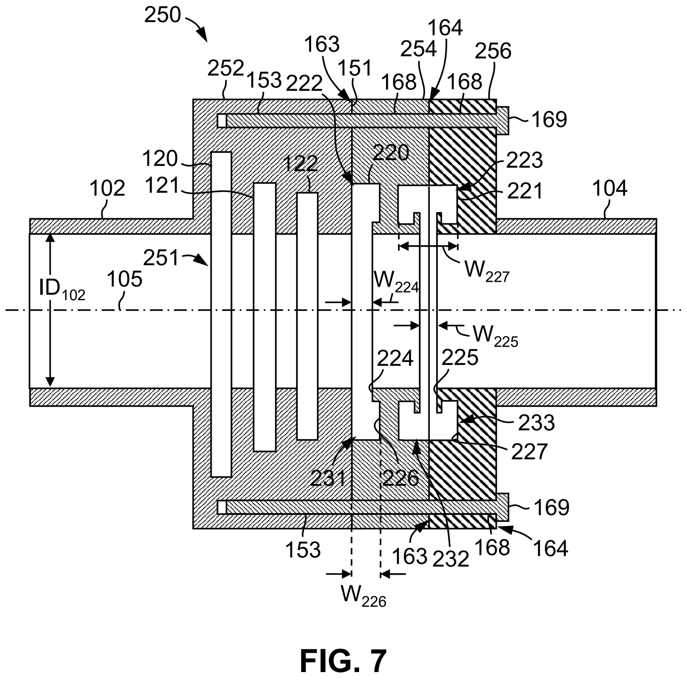

Referring now to FIG. 7, a plurality of stacked plates 252, 254, 256 for defining one or more radial resonators (such as radial resonators 120, 121, 122 in FIG. 2) that are coupled to the discharge line 102 is shown according to some embodiments. As with the stacked plates 152, 154, 156, 158 of FIG. 5, the stacked plates 252, 254, 256 may comprise flange plates that are abutted against one another to form or define a stack 250 that is coupled to the discharge line 102.

A first flange plate 252 of the stack 250 may comprise a connector flange plate that is connected to or integrated with (e.g., welded, bolted, threaded, etc.) the discharge line 102. The first flange plate 252 may share a number of features with the first flange plate 152 of stack 150 in FIG. 5. Specifically, the first flange plate 252 may include the planar connector surface 151, and the plurality of mounting holes (or apertures) 153 as previously described. However, the first flange pate 252 may define each of the radial resonators 120, 121, 122. Specifically, the first flange pate 252 may include a central bore 251 that is aligned with the bore of the discharge line 102 and a plurality of recesses or slots extending radially outward from the central bore 251 to define the radial resonators 120, 121, 122.

Additional radial resonators 220, 221 may also be defined by and between the plates 252, 254, 256 of the stack 250. Specifically, the radial resonators 220, 221 may define fixed volumes 222, 223, respectively that extend radially outward and circumferentially about the longitudinal axis 105 in a similar manner to that described above for the radial resonators 120, 121, 122. In addition, the radial resonators 220, 221 may be configured as Helmholtz resonators.

Specifically, the fixed volumes 222, 223 of the radial resonators 220, 221 may include a first or radially inner portion 224, 225, and a second or radially outer portion 226, 227, respectively. The radially inner portions 224, 225 may be positioned radially inward from the radially outer portions 226, 227 for the radial resonators 220, 221.

For the radial resonator 220, the radially inner portion 224 may have an axial width W₂₂₄, and the radially outer portion 226 may have an axial width W₂₂₆. Similarly, for the radial resonator 221, the radially inner portion 225 may have an axial width W₂₂₅, and the radially outer portion 227 may have an axial width W₂₂₇. The axial widths W₂₂₄, W₂₂₅, W₂₂₆, W₂₂₇ may each be measured axially relative to the longitudinal axis between axially opposing walls or terminal surfaces of the portions 224, 225, 226, 227, respectively.

For the radial resonator 220, the axial width W₂₂₄ of the radially inner portion 224 may be less than the axial width W₂₂₆ of the radially outer portion 226, and for the radial resonator 221, the axial width W₂₂₅ may be less than the axial width W₂₂₇ of the radially outer portion 227. Thus, during operations, as the refrigerant flows radially into fixed volumes of the radial resonators 220, 221, the refrigerant may first advance through the constrictions formed by the first portions 224, 225, and then may advance into the radially outer portions 226, 227. Thus, the radial resonators 220, 221 are configured as Helmholtz resonators that have constrictions defined by the radially inner portions 224, 225, respectively.

In addition, each of the radial resonators 220, 221 may be formed by aligning corresponding recesses of the flange plates 252, 254, 256. Specifically, the flange plates 254, 256 may share a number of features with the flange plates 154, 156, 158 of FIG. 5. For instance, the flange plates 254, 256 may include first and second sides 163, 164 and mounting holes 168. In addition, the flange plates 252, 254, 256 may include recesses that form or define the radial resonators 220, 221. Specifically, the first side 163 of the flange plate 252 may include an axially extending recess 231. When the first side 163 of the flange plate 254 is abutted against the connector surface 151 of the flange plate 252, the recess 231 and the connector surface 151 define the radial resonator 220.

In addition, the second side 164 of the flange plate 254 may include an axially extending recess 232, and the first side 163 of the flange plate 256 may include an axially extending recess 233. When the first side 163 of the flange plate 256 is abutted against the second side 164 of the flange plate 254, the recesses 232, 233 may align (such as radially align) to define the radial resonator 221.

Without being limited to this or any other theory, Helmholtz resonator, such as the Helmholtz radial resonators 220, 221 in FIG. 5 may generally attenuate lower frequencies than corresponding quarter wave resonators (e.g., the radial resonators 120, 121, 122 in FIG. 5). Thus, including both Helmholtz and quarter wave radial resonators in the stack 250 may allow the radial resonators of the stack 250 to attenuate pressure pulsations across a wider frequency range.

In some embodiments, a stack of plates may be used to define one or more of the radial resonators 120, 121, 122 shown in FIG. 2, where the stack of plates are not configured as flanges for the discharge line 102. For instance, FIG. 8 shows a flange cap 300 that is attached (e.g., bolted) onto a discharge flange 29 of the compressor 26. The flange cap 300 includes an internal recess or cavity 310 that is configured to receive a stack 350 of a plurality of plates 352, 354, 356 therein to define one or more radial resonators 120, 121, 122 (FIG. 2).

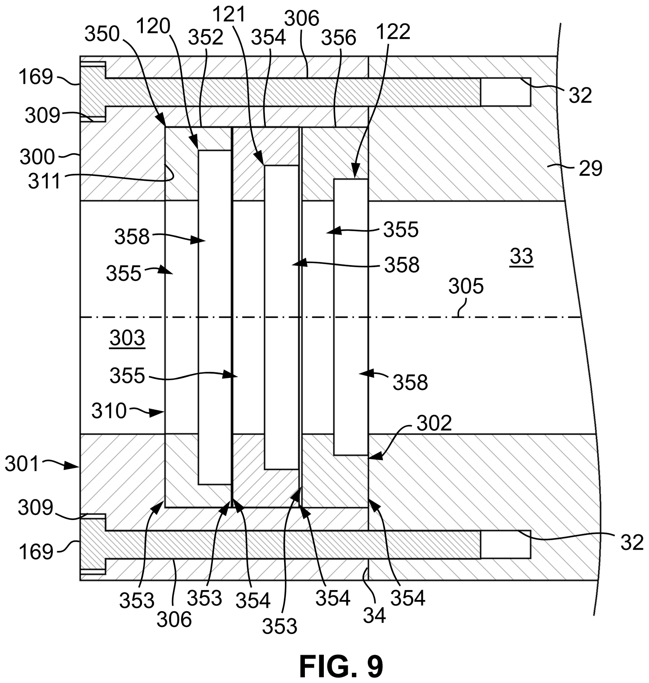

Referring now to FIG. 9, a cross-section of the assembly shown in FIG. 8 is shown along section A-A. The discharge flange 29 may include a bore 33 having a central or longitudinal axis 305, and a planar connector face 34 that includes a plurality of mounting holes (or apertures) 32. Thus, the bore 33 may comprise a "discharge flow path" as previously described herein.

The flange cap 300 is a generally cylindrical member having a first end 301 and a second end 302 opposite the first end 301. The second end 302 is engaged with and mounted to the connector face 34 so that the flange cap 300 is co-axially aligned with the longitudinal axis 305, and the first end 301 is projected away from the connector face 34 along the longitudinal axis 305 (or a projection thereof). In addition, the flange cap 300 includes a bore 303 extending axially from the first end 301, and a recess 310 extending axially from the bore 303 to the second end 302. The inner diameter of the recess 310 is greater than the inner diameter of the bore 303 so that a radially extending, annular shoulder 311 is defined in the recess 310 at the intersection with bore 303.

The flange cap 300 may include a plurality of first mounting bores 306 that extend between the ends 301, 302. A plurality of counter bores 309 may extend axially into the first side 301 at the plurality of mounting holes 306. To mount the flange cap 300 to the discharge flange 29 of compressor 26, a plurality of the mounting members 169 are received through the mounting holes 306 and threadably engaged into the mounting holes 32 of discharge flange 29. The counterbores allow the heads of the mounting members 169 to be recessed into the counter bores 309.

In addition, as shown in FIG. 8, the first side 301 of the flange cap 300 may have a plurality of mounting holes (or apertures) 308. The plurality of mounting holes 308 are configured to threadably receive additional mounting members (e.g., screws, bolts, etc.) to allow the flange cap 300 to connect to an end flange of the discharge line 102 (or another line of the refrigerant circuit 20).

The stack 350 of plates 352, 354, 356 are received in the recess 310 and compressed axially between the shoulder 311 and the connector face 34 when the flange cap 300 is secured to the discharge flange 29 via mounting members 169 as previously described. In some embodiments, the plates 352, 354, 356 of the stack 350 may be secured to one another (e.g., via screws, bolts, welding, clamps, etc.) separately from any potential compression of the stack 350 in the recess 310.

Each plate 352, 354, 356 is a disk-shaped cylindrical member that includes a first side 353 and a second side 354 opposite the first side 353. A bore 355 extends axially into the first side 353, and a cylindrical recess 358 extends axially from the bore 355 to the second side 354. The bores 355 of each of the plates 352, 354, 356 are all substantially the same (that is, have substantially the same inner diameter); however, the cylindrical recesses 358 of each of the plates 352, 354, 356 may have different inner diameters and/or axial widths so that the cylindrical recesses 358 may define the differently sized radial resonators 120 when the stack 350 is captured in the recess 310 as previously described.

In particular, the cylindrical recess 358 of the plate 352 may have a greater inner diameter than the cylindrical recess 358 of the plate 354, and the cylindrical recess 358 may, in turn, have a greater inner diameter than the cylindrical recess 358 of the plate 356. Thus, when the plates 352, 354, 356 are abutted or stacked against one another within the recess 310, the cylindrical recess 358 of the plate 352 may at least partially define the radial resonator 120, the cylindrical recess 358 of the plate 354 may at least partially define the radial resonator 121, and the cylindrical recess 358 of the plate 356 may at least partially define the radial resonator 122. The numbering, selection, and configuration of the plates 352, 354, 356 may be adjusted in various embodiments so as to define different numbers, shapes, configurations of radial resonators (e.g., radial resonators 120, 121, 122, etc.) in the recess 310. Thus, the depiction of radial resonators 120, 121, 122 in FIGS. 8 and 9 is not limiting for other embodiments.

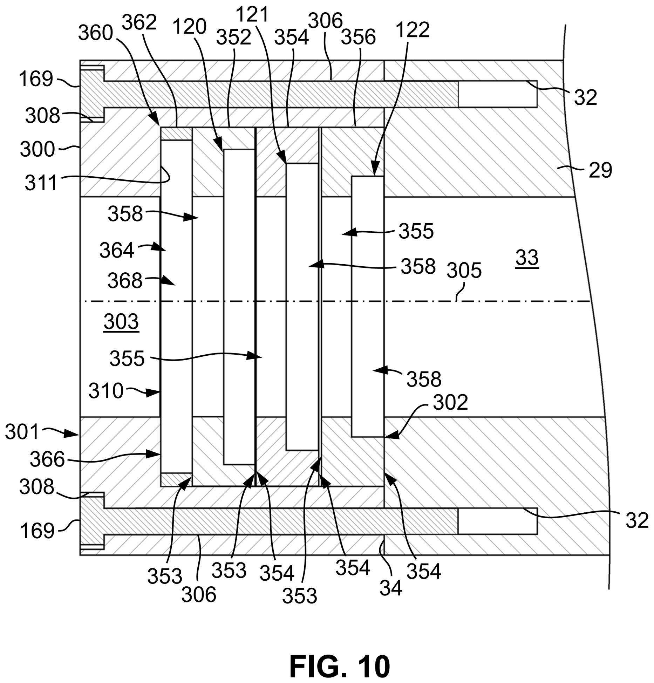

For example, reference is now made to FIG. 10, an alternative stack 360 that may be compressed within the recess 310 of the flange cap 300 is shown according to some embodiments. The stack 360 may include the plates 352, 354, 356 of the stack 350. In addition, the stack 360 includes an additional plate 362 that is positioned axially between the shoulder 311 and the plate 352 along the longitudinal axis 305. The plate 362 is a ring-shaped body having a central opening 364. When the plate 362 is captured between the shoulder 311 and the plate 352, the shoulder 311, the central opening 364, and the first side 353 of the plate 352 may together define an additional radial resonator 366 having a fixed, disk-shaped volume 368.

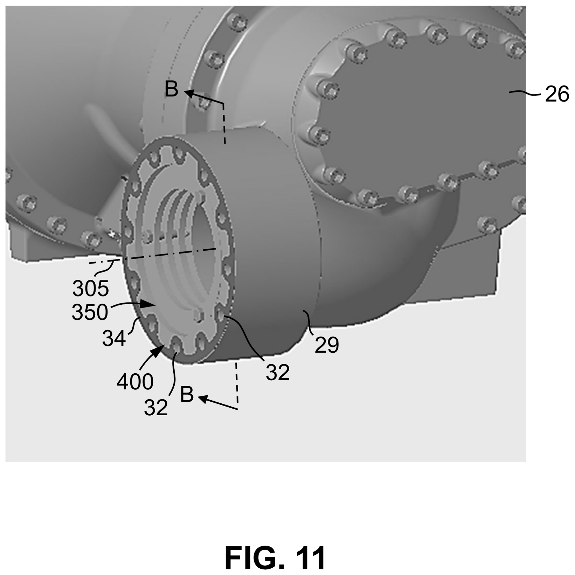

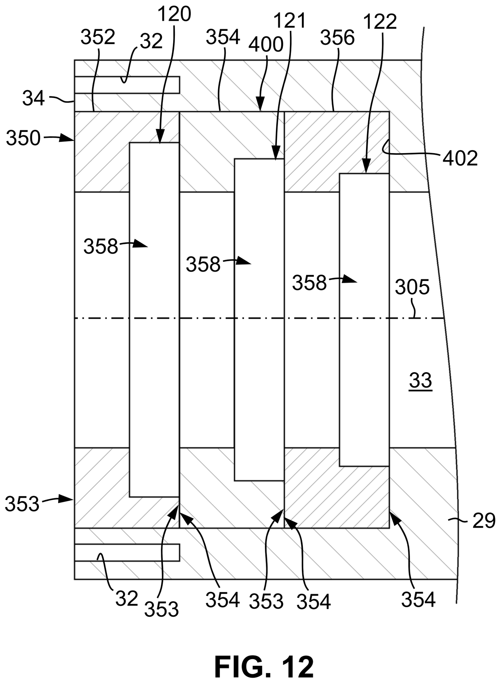

Referring now to FIG. 11, in some embodiments, the stack 350 of plates 352, 354, 356 (or another stack of plates as previously described) may be received within a recess or cavity 400 that is formed or defined in the discharge flange 29 of the compressor 26. Specifically, FIG. 12 shows a cross-section of the discharge flange 29 along section B-B in FIG. 11. The recess 400 extends axially into the discharge flange 29 from the planar connector surface 34 along the longitudinal axis 305. The recess 400 may have an inner diameter that is greater than the inner diameter of the bore 33, so that a radially extending annular shoulder 402 is defined in the recess 400 at the intersection with the bore 33.

The plates 352, 354, 356 of the stack 350 are received axially into the recess 400 from the planar connector surface 34 along the longitudinal axis 305. The plates 352, 354, 356 may be arranged in the recess 400 so that the second side 354 of plate 356 is abutted against the shoulder 402, the first side 353 of the plate 352 faces axially out of the recess 400, and the sides 353, 354 of the plate 354 are engaged between the second side 354 of plate 352 and the first side 353 of the plate 356. As a result, the recesses 358 of the plates 352, 354, 356 may at least partially define the radial resonators 120, 121, 122 as previously described.

A connecting flange (not shown) of the discharge line 102 (FIG. 2) may be secured to the planar connector surface 34 via the plurality of mounting holes 32. In some embodiments, the connecting flange (not shown) of the discharge line 102 may comprise the stack 350 (particularly via the first side 353 of the plate 352) against the shoulder 402 within the recess 400. In some embodiments, the plates 352, 354, 356 of the stack 350 may be secured to one another (e.g., via screws, bolts, welding, etc.) separately from any potential compression of the stack 350 in the recess 400 (e.g., via a connecting flange on the discharge line 102).

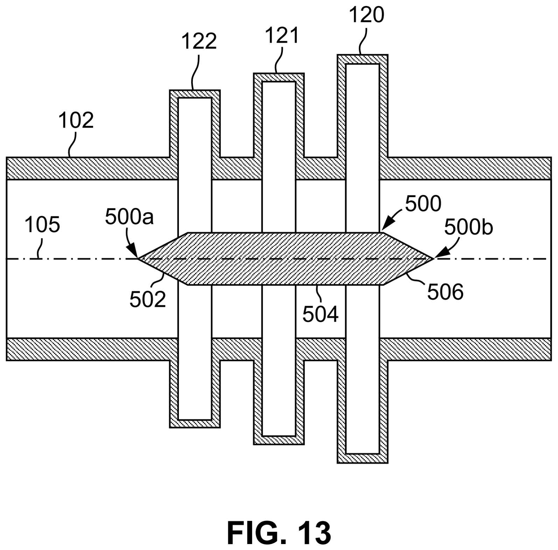

Referring now to FIG. 13, in some embodiments, a flow separator 500 may be positioned in the discharge line 102 at or proximate to the radial resonators 120, 121, 122. As previously described, the radial resonators 120, 121, 122 may be configured as quarter wave resonators. As a result, and also as previously described, the resonators 120, 121, 122 may reflect phase-shifted portions of pressure waves into an interference region positioned outside of the fixed volumes 123, 124, 125 of resonators 120, 121, 122, respectively, and within the discharge line 102. However, as the inner diameter of the discharge line 102 increases, the interference region may be shifted out of the central region of the discharge line 102. As a result, pressure pulsations may pass by the radial resonators 120, 121, 122 without (or largely without) passing through the interference region(s), so that their attenuation is prevented (or at least restricted).

Thus, without being limited to this or any other theory, the flow separator 500 may generally deflect the flow the refrigerant radially away from the central region of the discharge line 102 and toward the radial resonators 120, 121, 122. As a result, again without being limited to this or any other theory, the flow of refrigerant, and any pressure pulsations carried thereby, may be forced to flow through the interference region(s) generated outside of the radial resonators 120, 121, 122 so that the radial resonators may more effectively attenuate pressure pulsations during operations.

The flow separator 500 may be at least partially axially overlapped with one or more of the radial resonators 120, 121, 122 relative to the longitudinal axis 105. In addition, the flow separator 500 may have any suitable shape. For instance, for the example in FIG. 13, the flow separator 500 may have a generally cylindrically shaped member having a first or upstream end 500a, a second or downstream end 500b. In addition, the flow separator 500 may have a first or upstream conical surface 502 positioned at the upstream end 500a, a second or downstream conical surface 506 positioned at the downstream end 500b, and a cylindrical surface extending axially between the upstream conical surface 502 and the downstream conical surface 506. The upstream conical surface 502 may taper toward the upstream end 500a, and the downstream conical surface 506 may taper toward the downstream end 500b.

Without being limited to this or any other theory, the upstream conical surface 502 may initially divert the flow of refrigerant radially toward the radial resonators 120, 121, 122, and the downstream conical surface 506 may gradually expand the refrigerant flow radially inward toward the longitudinal axis 105 downstream of the radial resonators 120, 121, 122. In addition, again without being limited to this or any other theory, the conical surfaces 502, 506 may help to reduce turbulence induced pressure drop in the flow of refrigerant through the discharge line 102 during operations.

Referring now to FIGS. 14 and 15, a climate control system 600 for conditioning an interior space 612 is shown that may include an embodiment of a muffler assembly 100 according to some embodiments disclosed herein. The interior space 612 is shown to include the interior space of a house or dwelling 614; however, as previously described, the interior space 612 may comprise any other suitable interior space that may be conditioned by a climate control system. For instance, the interior space 612 may comprise the interior space of a building, office, retail space, storage unit, refrigerator, freezer, etc.

The climate control system 600 may be configured to circulate a refrigerant through a fluid circuit (or refrigerant circuit) 658 to transfer heat between the interior space 612 and an outdoor ambient environment 605 (or "outdoor environment" 605). The outdoor environment 605 may comprise an environment that at least partially surrounds the interior space 612. For instance, in the embodiment illustrated in FIG. 14, the interior space 612 is an interior space of a house 614, and the outdoor environment comprises the outdoor environment that surrounds the house 614.

The climate control system 10 may include a compressor 630, a first heat exchanger 632, a pair of expansion devices 636, 642, a second heat exchanger 644, and a reversing valve 628 that are interconnected by a plurality of refrigerant lines 56 to at least partially define the fluid circuit 658. The fluid circuit 658 may circulate any suitable refrigerant (or refrigerants) during operations. For instance, the refrigerant circulated through fluid circuit 658 may include other refrigerant(s) that may have a relatively low Global Warming Potential (GWP), such as other so called "A2L" designated refrigerants including hydrofluoroolefins (HFOs) and blends thereof (e.g., R-1234fy, R-1234ze, R-452B, etc.). Also, in some embodiments, the fluid circuit 658 may circulate other refrigerants, such as one or more refrigerants that may comprise hydrofluorocarbons (HFCs), chlorofluorocarbons (CFCs), hydrochlorofluorocarbons (HCFCs), fluorocarbons (FCs), hydrocarbons (HCs), Ammonia (NH₃), carbon dioxide (CO₂), or some combination thereof.

In addition, the climate control system 600 may include a muffler assembly 100 according to one or more embodiments disclosed herein for attenuating pressure pulsations in the refrigerant discharged from the compressor 630 during operations. Thus, the muffler assembly 100 may be positioned along the refrigerant line 656 extending between the compressor 630 and the reversing valve 628, so that the portion of the refrigerant line 656 positioned between the compressor 630 and the muffler assembly 100 may be the discharge line 102 previously described.

The compressor 630 may include any suitable type of refrigerant compressor design. For instance, in some embodiments, the refrigerant compressor may comprise a reciprocating compressor, a scroll compressor, a screw compressor, a rotary compressor, centrifugal compressor, etc. Some compressor types, such as a reciprocating compressor, may be more prone to generate stronger pressure pulsations in the flow of refrigerant in the fluid circuit 658. Thus, in some embodiments, the muffler assembly 100 may be particularly useful for use with climate control systems (such as climate control system 600) that include a compressor that may be predisposed to generation of significant pressure pulsations, such as a reciprocating compressor.

In the embodiment illustrated in FIGS. 14 and 15, the climate control system 600 may comprise a heat pump that may be operated to selectively cool or heat the interior space 612 via the fluid circuit 658 during operations. Thus, during a cooling mode operation of the climate control system 600 illustrated in FIG. 14, the climate control system 600 may generally transfer heat from the interior space 612 to the outdoor environment 605 via the fluid circuit 658, and during a heating mode operation of the climate control system illustrated in FIG. 14, the climate control system 600 may generally transfer heat from the outdoor environment 605 to the interior space 612 via the fluid circuit 658. Each of the cooling mode operation (FIG. 14) and heating mode operation (FIG. 15) will be described in more detail.

As shown in FIG. 14, during a cooling mode operation to cool the interior space 612, the compressor 630 compresses the refrigerant in a gaseous state and outputs the compressed refrigerant through the muffler assembly 100 to attenuate pressure pulsations as previously described. Thereafter, the refrigerant flows to the reversing valve 628, which may then route the compressed refrigerant to the first heat exchanger 632. In the cooling mode operation of FIG. 14, the first heat exchanger 632 is configured to facilitate heat transfer from the refrigerant to the outdoor environment 605. Specifically, the refrigerant may flow through one or more coils 634 of the first heat exchanger 632, while a fan 638 generates an airflow 640 that is flowed over and around the one or more coils 634 to thereby draw heat away from the refrigerant flowing therein. The airflow 640 is then directed away from the first heat exchanger 632 and into the outdoor environment 605. The transfer of heat from the refrigerant to the airflow 640 via the first heat exchanger 632 may cause the refrigerant to at least partially condense to a liquid, such that the first heat exchanger 632 may function as a "condenser" when operating in the cooling mode of FIG. 14.

The liquid (or substantially liquid) refrigerant is then directed through the first expansion device 636 and then the second expansion device 642. In the cooling mode operation of FIG. 14, the first expansion device 636 may be positioned or actuated as to not substantially restrict or meter the flow of refrigerant therethrough. However, the second expansion device 642 may be actuated or set so as to controllably constrict and expand the flow of refrigerant so as to reduce a temperature thereof. The first expansion device 636 and second expansion device 642 may comprise orifices or expansion valves, such as electronic expansion valves (EEVs) that are actuated by a controller (e.g., controller 80 described herein). Alternatively, the first expansion device 636 and the second expansion device 642 may comprise a thermostatic expansion valve (TXV) that is configured to adjust in position (that is, in opening position) in response to one or more pressures and/or temperatures of the refrigerant flowing in the fluid circuit 658 (or a portion thereof).

The expanded, cold refrigerant is then directed through the second heat exchanger 644 which is configured to transfer heat from an airflow 650 generated by a blower 648 to the refrigerant. Specifically, the refrigerant may flow through one or more coils 646 of the second heat exchanger 644, while the blower 648 generates the airflow 650 that is flowed over and around the one or more coils 646 to thereby draw heat away from the airflow 650 and into the refrigerant. The blower 648 may also be driven by an electric motor; however, that motor is not specifically depicted so as to simplify the drawings.

The cooled airflow 650 is then discharged from the second heat exchanger 644 to the interior space 612 so as to reduce a temperature (and relatively humidity) therein. The airflow 650 may be discharged from the second heat exchanger 644 to the interior space 612 via suitable ducting 652 (e.g., rigid ducts, flexible hoses, or any other suitable fluid conveyance system).

The transfer of heat from the airflow 650 to the refrigerant via the second heat exchanger 644 may cause the refrigerant to vaporize or at least partially vaporize to a gas, such that the second heat exchanger 644 may function as an "evaporator" when operating in the cooling mode of FIG. 14. The vaporized (or partially vaporized) refrigerant may progress from the second heat exchanger 644 back to the compressor 630 via the reversing valve 628 so as to restart the cycle described above.

Referring now to FIG. 15, during a heating mode operation of the climate control system 600 the flow direction of the refrigerant in the fluid circuit 658 is generally reversed from that described for the cooling mode operation (FIG. 14). Specifically, during a heating mode operation, the reversing valve 628 is actuated so as to route the compressed refrigerant emitted from the compressor 630 to the second heat exchanger 644 rather than the first heat exchanger 632. As a result, in the heating mode operation shown in FIG. 15, the second heat exchanger 644 is configured to transfer heat from the refrigerant to the interior space 612 via airflow 650 so as to condense the refrigerant. Thus, in the heating mode operation of FIG. 15, the second heat exchanger 644 functions as a "condenser" for the refrigerant. The condensed refrigerant is then directed through the second expansion device 642 and the first expansion device 636; however, in the heating mode operation of FIG. 15, the second expansion device 642 is positioned or actuated so as to not substantially restrict or meter the flow of refrigerant therethrough, and the first expansion device 636 is actuated so as to controllably constrict and expand the flow of refrigerant so as to reduce a temperature thereof.

The expanded, cold refrigerant is then directed through the first heat exchanger 632 which is configured to transfer heat form the airflow 640 to the refrigerant to thereby vaporize the refrigerant and cool the airflow 640. Thus, in the heating mode operation, the first heat exchanger 632 functions the "evaporator" for the refrigerant. Finally, the vaporized refrigerant is routed back to the compressor 630 via the reversing valve 628 to restart the cycle described above.

While the climate control system 600 illustrated in FIGS. 14 and 15 has been described as a heat pump that is configured to both heat and cool the interior space 612 via circulation of a refrigerant, it should be appreciated that climate control system 600 may be differently configured in other embodiments. For instance, in some embodiments, the climate control system 600 may be configured as an air conditioning system that is configured to run in cooling mode (FIG. 14) only. Thus, in these embodiments, the reversing valve 628 may be omitted and the climate control system 600 may be configured to circulate the refrigerant in the direction illustrated in FIG. 14 so as to cool the interior space 612. In some of these embodiments, where the climate control system 600 is configured as an air conditioning system, a supplemental heating device (e.g., an electrically resistive heater, a combustion furnace, etc.) may be used to selectively heat the airflow 650. Thus, references to the climate control system 600 as a heat pump as shown in FIGS. 14 and 15 is merely illustrative of some embodiments disclosed herein.

In both the cooling mode operation (FIG. 14) and the heating mode operation (FIG. 15), the climate control system 600 may be configured to deliver either a single set cooling or heating capacity, respectively, or a plurality of different cooling or heating capacities. Specifically, the climate control system 600 may be operable to deliver a single cooling or heating capacity by circulating the refrigerant through the refrigerant circuit 658 at single flow rate via a single speed of the compressor 630, and by outputting set flow rates for the airflows 640, 650 via single operating speeds of the fan 638 and blower 648, respectively.

Conversely, the climate control system 600 may be operable to deliver a plurality of cooling or heating capacities by circulating the refrigerant through the refrigerant circuit 658 at a plurality of different flow rates via a plurality of speeds of the compressor 630 and by outputting a plurality of different flow rates for the airflows 640, 650 via a plurality of different operating speeds of the fan 638 and blower 648, respectively. For embodiments of climate control system 600 that are configured to provide a plurality of different cooling or heating capacities, the different speeds of the compressor 630, fan 638, and blower 648 may be configured in a plurality of set stages or levels (e.g., such a low stage and high stage), or may be configured as a continuous series of potential speeds along defined ranges (e.g., such as for a fully variable climate control system 600).

Referring again to FIGS. 14 and 15, in some embodiments, the second heat exchanger 644, second expansion device 642, and blower 648 may be embodied as an at least partially integrated first unit 660. In addition, in some embodiments, the first heat exchanger 632, first expansion device 636, fan 638, fan motor 639, reversing valve 628, compressor 630, and muffler assembly 100 may be embodied as an at least partially integrated second unit 670. In some embodiments, the first unit 660 may be positioned in any suitable indoor space that may or may not be the same (or connected to) the interior space 612. For instance, the first unit 660 may be positioned in an attic, storage room, basement, building, enclosure, that is proximate to, connected to, or at least partially integrated (or inside of) the interior space 612. Likewise, the second unit 670 may be positioned in the outdoor environment 605. Thus, in some embodiments, the first unit 660 may be referred to herein as an "indoor unit" and the second unit 670 may be referred to as an "outdoor unit."

However, these example positions of the units 660, 670 are not intended to limit a particular location of either of the units 660, 670 in various embodiments. For example, in some embodiments, the first unit 660 and second unit 670 may be at least partially integrated with one another and co-located in single location. For instance, in some embodiments, the first unit 660 and the second unit 670 may be integrated with one another as a so-called "packaged unit" and located in the outdoor environment 605. In some embodiments, the at least partially integrated units 660, 670 (e.g., as a packaged unit) may be positioned on a rooftop of the house 614, dwelling, building, etc. that defines the interior space 612. Thus, in these embodiments, the climate control system 600 may be referred to as a so-called "rooftop unit."
As explained above and reiterated below, the present disclosure includes, without limitation, the following example implementations.

Clause 1. A climate control system including a refrigerant compressor, a discharge line coupled to the refrigerant compressor, a muffler assembly in fluid communication with the discharge line, the muffler assembly including an adjustable resonator that is in fluid communication with the discharge line, the adjustable resonator having an adjustable internal volume, and a controller communicatively coupled to the adjustable resonator, wherein the controller is configured to adjust the adjustable internal volume of the adjustable resonator based at least in part on an operating speed of the refrigerant compressor to thereby attenuate a pressure pulsation in a flow of refrigerant emitted from the refrigerant compressor.

Clause 2. The climate control system of clause 1, wherein the controller is configured to adjust the adjustable internal volume based on a speed of sound through the refrigerant and the operating speed of the refrigerant compressor.

Clause 3. The climate control system of clause 1 or 2, wherein the controller is configured to adjust a volume of compressor lubricant that is collected in the adjustable resonator to adjust the adjustable volume.

Clause 4. The climate control system of clause 3, wherein the adjustable resonator includes a floating barrier that is configured to float on top of the volume of compressor lubricant in the adjustable resonator, and wherein the adjustable volume of the adjustable resonator is positioned vertically above the floating barrier.

Clause 5. The climate control system of clause 4, wherein the adjustable resonator is positioned along a vertically lower side of the discharge line.

Clause 6. The climate control system of any preceding clause , wherein the adjustable resonator includes: one or more vertically-spaced ports; and one or more drain valves that are each in fluid communication with a corresponding one of the one or more vertically-spaced ports, wherein the controller is communicatively coupled to the one or more drain valves, and is configured to actuate the one or more drain valves to adjust the volume of compressor lubricant that is collected in the adjustable resonator to adjust the adjustable volume.

Clause 7. The climate control system of any preceding clause , wherein the adjustable resonator includes a piston; and an actuator coupled to the piston, wherein the controller is communicatively coupled to the actuator and is configured to adjust a position of the piston within the adjustable resonator via the actuator to adjust the adjustable volume.

Clause 8. The climate control system of clause 7, wherein the actuator comprises a linear actuator.

Clause 9. The climate control system of clause 7, wherein the resonator is positioned along a vertically upper side of the discharge line.

Clause 10. The climate control system of any preceding clause , wherein the muffler assembly further comprises one or more radial resonators positioned along the discharge line, wherein each of the one or more radial resonators comprise a fixed volume that extends radially outward from an inner diameter of the discharge line and circumferentially about a longitudinal axis of the discharge line.

Clause 11. The climate control system of clause 10, wherein the one or more radial resonators comprises a plurality of radial resonators that are axially spaced from one another relative to the longitudinal axis, wherein each of the plurality of radial resonators includes a different, fixed volume.

Clause 12. A method that includes (a) operating a refrigerant compressor of a climate control system to discharge refrigerant into a discharge line, (b) adjusting an adjustable volume of an adjustable resonator coupled to the discharge line based at least in part on an operating speed of the refrigerant compressor, and (c) flowing refrigerant into the adjustable volume from the discharge line to attenuate a pressure pulsation emitted into the discharge line from the refrigerant compressor.

Clause 13. The method of clause 12, wherein (b) includes adjusting the adjustable volume based on the operating speed of the refrigerant compressor and a speed of sound through the refrigerant.

Clause 14. The method of clause 12 or 13, wherein (b) further includes adjusting a volume of compressor lubricant that is collected into the adjustable resonator.

Clause 15. The method of clause 14, wherein (b) further includes actuating one or more drain valves that to selectively drain compressor lubricant out of the adjustable resonator.

Clause 16. The method of clause 15, wherein (b) further includes moving a floating barrier vertically in the adjustable resonator.

Clause 17. The method of any one of clauses 12 to 16, wherein (b) further includes adjusting a position of a piston within the adjustable resonator.

Clause 18. The method of clause 17, wherein (b) further comprises adjusting the position of the piston by use of a linear actuator.

Clause 19. The method of any one of clauses 9 to 13, further including (d) attenuating one or more additional pressure pulsations emitted by the refrigerant compressor into the discharge line by use of one or more radial resonators positioned along the discharge line, each of the one or more radial resonators comprising a fixed volume that extends radially outward from an inner diameter of the discharge line and circumferentially about a longitudinal axis of the discharge line.

Clause 20. The method of clause 19, wherein (d) further includes (d1) attenuating a first pressure pulsation of the one or more additional pressure pulsations with a first radial resonator of the one or more radial resonators, and (d2) attenuating a second pressure pulsation of the one or more additional pressure pulsations with a second radial resonator of the one or more radial resonators, wherein the first pressure pulsation has a first frequency and the second pressure pulsation has a second frequency that is different from the first frequency, and wherein the first radial resonator has a first internal volume and the second radial resonator has a second internal volume that is different from the first internal volume.

Clause 21. A climate control system including a refrigerant compressor; and a muffler assembly in fluid communication with a discharge flow path coupled to the refrigerant compressor, the muffler assembly configured to attenuate pressure pulsations in a flow of refrigerant emitted from the refrigerant compressor, the muffler assembly including a plurality of radial resonators, each of the plurality of radial resonators defining a volume in fluid communication with the discharge flow path that extends radially outward from an inner diameter of the discharge flow path and circumferentially about a central axis of the discharge flow path.

Clause 22. The climate control system of clause 21, wherein the volume of each of the plurality of radial resonators has a different size.

Clause 23. The climate control system of clause 21 or 22, wherein the plurality of radial resonators includes a first radial resonator that is configured to attenuate pressure pulsations having a first frequency and a second radial resonator that is configured to attenuate pressure pulsations having a second frequency, the second frequency being different from the first frequency.

Clause 24. The climate control system of clause 21, 22 or 23, wherein the plurality of radial resonators are defined by a plurality of stacked plates.

Clause 25. The climate control system of clause 24, wherein one of the plurality of radial resonators is defined by a pair of adjacent stacked plates of the plurality of stacked plates.

Clause 26. The climate control system of clause 25, wherein one of the pair of adjacent stacked plates includes a first recess, wherein another of the pair of adjacent stacked plates includes a second recess, and wherein an abutment of the pair of adjacent stacked plates aligns the first recess with the second recess to define the one of the plurality of radial resonators.

Clause 27. The climate control system of clause 24, 25 or 26, wherein a first plate of the plurality of stacked plates includes a first cylindrical body having first and second sides, and a first bore extending between the first and second sides of the first cylindrical body.

Clause 28. The climate control system of clause 27, wherein a second plate of the plurality of stacked plates includes a second cylindrical body having first and second sides, a cylindrical recess extending into the second cylindrical body from the first side of the second cylindrical body, and a second bore extending from the cylindrical recess to the second side of the second cylindrical body, wherein the first side of the second cylindrical body of the second plate is abutted against the second side of the first cylindrical body of the first plate so that the cylindrical recess and the second side of the first cylindrical body define the volume of one of the plurality of radial resonators.

Clause 29. The climate control system of any one of clauses 24 to 28, wherein the muffler assembly further includes an adjustable resonator that is in fluid communication with the discharge flow path, the adjustable resonator having an adjustable internal volume.

Clause 30. The climate control system of clause 29, wherein the muffler assembly further includes a controller communicatively coupled to the adjustable resonator, wherein the controller is configured to adjust the adjustable internal volume based at least in part on an operating speed of the refrigerant compressor to thereby attenuate a pressure pulsation emitted from the refrigerant compressor.

Clause 31. A muffler assembly for attenuating pressure pulsations emitted from a refrigerant compressor of a climate control system, the muffler assembly including a stack of plates that are configured to be in fluid communication with a discharge flow path coupled to the refrigerant compressor, the stack of plates including a first plate and a second plate, wherein the first plate and the second plate are configured to be abutted against one another in the stack to define a volume in fluid communication with the discharge flow path that extends radially outward from an inner diameter of the discharge flow path and circumferentially about a central axis of the discharge flow path.

Clause 32. The muffler assembly of clause 31, wherein the first plate includes a first cylindrical body having first and second sides and a first bore extending between the first and second sides of the first cylindrical body.

Clause 33. The muffler assembly of clause 32, wherein the second plate includes a second cylindrical body having first and second sides, a cylindrical recess extending into the second cylindrical body from the first side of the second cylindrical body, and a second bore extending from the cylindrical recess to the second side of the second cylindrical body, wherein the first side of the second cylindrical body of the second plate is configured to be abutted against the second side of the first cylindrical body of the first plate in the stack so that the cylindrical recess and the second side of the first cylindrical body defines the volume.

Clause 34. The muffler assembly of clause 31, 32 or 33, wherein the first plate includes a first recess, the second plate includes a second recess, and the first plate and the second plate are configured to be abutted against one another in the stack to align the first recess with the second recess and thereby define the volume.

Clause 35. The muffler assembly of any one of clauses 31 to 34, wherein the volume is a disk-shaped volume.

Clause 36. The muffler assembly of any one of clauses 31 to 35, wherein the volume includes a first portion extending radially outward from the inner diameter of the discharge line relative to the central axis, and a second portion extending radially outward from the first portion, the second portion having larger axial width than the first portion relative to the central axis.

Clause 37. The muffler assembly of any one of clauses 31 to 36, wherein the volume comprises a first volume, and wherein the stack of plates further includes a third flange plate, wherein the second plate and the third flange plate are configured to be abutted against one another in the stack to define a second volume in fluid communication with the flow path that extends radially outward from the inner diameter of the flow path and circumferentially about the central axis of the flow path, wherein the second volume has a different size than the first volume.

Clause 38. A method including (a) connecting a discharge line to a refrigerant compressor of a climate control system, the discharge line including a first flange, and (b) connecting a second flange to the first flange, to thereby define a radial resonator between the first flange and the second flange that is configured to attenuate pressure pulsations emitted by the refrigerant compressor into the discharge line, the radial resonator defining a volume in fluid communication with the discharge line that extends radially outward from an inner diameter of the discharge line and circumferentially about a central axis of the discharge line.

Clause 39. The method of clause 18 or 38, wherein (b) includes aligning a first recess in the first flange with a second recess in the second flange to define the radial resonator.

Clause 40. The method of clause 38 or 39, wherein (b) includes aligning a cylindrical recess on the second flange with a planar side of the first flange to define the radial resonator.

Clause 41. The method of clause 38, 39 or 40, wherein the radial resonator comprises a first radial resonator, and wherein the method further including (c) connecting a third flange to the second flange, to thereby define a second radial resonator between the third flange and the second flange, the second radial resonator defining a volume in fluid communication with the discharge line that extends radially outward from the inner diameter of the discharge line and circumferentially about the central axis, and wherein the volume of the second radial resonator has a different size than the first radial resonator. Embodiments disclosed herein include muffler assemblies for a climate control system that are configured to attenuate pressure pulsations emitted from a refrigerant compressor over a range of operating speeds. In some embodiments, the muffler assemblies may include a plurality of resonators that are configured to attenuate pressure pulsations of different frequencies or frequency ranges. For instance, in some embodiments, a muffler assembly may include one or more of a plurality of radial resonators and/or one or more adjustable resonators that may allow pressure pulsations across a wider frequency range to be attenuated during operations. Thus, through use of the embodiments disclosed herein, a climate control system may more effectively attenuate pressure pulsations over a wider range of operating speeds of the refrigerant compressor.

Embodiments described and shown herein have illustrated a muffler assembly (e.g., muffler assembly 100) that is at least partially integrated with a compressor (such as a discharge port or portion of the compressor), positioned along a discharge line (e.g., discharge line 102 shown in FIG. 2) that is arranged downstream of a compressor, or some combination thereof. Thus, the precise positioning and arrangement of a muffler assembly according to embodiments disclosed herein may be varied, and no limitation as to the precise positioning of a muffler assembly is intended unless specifically specified.

Some embodiments of a muffler assembly 100 may be coupled to or included in other climate control systems that may be different from the chiller 10 of FIG. 1 or the heat pump 600 of FIGS. 14 and 15. However, it should be appreciated that embodiments of a muffler assembly 100 may be included in any climate control system that includes a refrigerant compressor for circulating a refrigerant along a refrigerant circuit. For instance, in some embodiments, a muffler assembly 100 may be included or incorporated in a water-to-water heat exchanger that is configured to generate hot water and for environmental cooling in a large building or space (e.g., such as a hotel).

The preceding discussion is directed to various exemplary embodiments. However, one of ordinary skill in the art will understand that the examples disclosed herein have broad application, and that the discussion of any embodiment is meant only to be exemplary of that embodiment, and not intended to suggest that the scope of the disclosure, including the claims, is limited to that embodiment.

The drawing figures are not necessarily to scale. Certain features and components herein may be shown exaggerated in scale or in somewhat schematic form and some details of conventional elements may not be shown in interest of clarity and conciseness.

In the discussion herein and in the claims, the terms "including" and "comprising" are used in an open-ended fashion, and thus should be interpreted to mean "including, but not limited to ...." Also, the term "couple" or "couples" is intended to mean either an indirect or direct connection. Thus, if a first device couples to a second device, that connection may be through a direct connection of the two devices, or through an indirect connection that is established via other devices, components, nodes, and connections. In addition, as used herein, the terms "axial" and "axially" generally mean along or parallel to a given axis (e.g., central axis of a body or a port), while the terms "radial" and "radially" generally mean perpendicular to the given axis. For instance, an axial distance refers to a distance measured along or parallel to the axis, and a radial distance means a distance measured perpendicular to the axis. Further, when used herein (including in the claims), the words "about," "generally," "substantially," "approximately," and the like, when used in reference to a stated value mean within a range of plus or minus 10% of the stated value.

While exemplary embodiments have been shown and described, modifications thereof can be made by one skilled in the art without departing from the scope or teachings herein. The embodiments described herein are exemplary only and are not limiting. Many variations and modifications of the systems, apparatus, and processes described herein are possible and are within the scope of the disclosure. Accordingly, the scope of protection is not limited to the embodiments described herein, but is only limited by the claims that follow, the scope of which shall include all equivalents of the subject matter of the claims. Unless expressly stated otherwise, the steps in a method claim may be performed in any order. The recitation of identifiers such as (a), (b), (c) or (1), (2), (3) before steps in a method claim are not intended to and do not specify a particular order to the steps, but rather are used to simplify subsequent reference to such steps.

## Claims

1. A climate control system comprising:
a refrigerant compressor;
a discharge line coupled to the refrigerant compressor;
a muffler assembly in fluid communication with the discharge line, the muffler assembly comprising:
an adjustable resonator that is in fluid communication with the discharge line, the adjustable resonator having an adjustable internal volume; and
a controller communicatively coupled to the adjustable resonator, wherein the controller is configured to adjust the adjustable internal volume of the adjustable resonator based at least in part on an operating speed of the refrigerant compressor to thereby attenuate a pressure pulsation in a flow of refrigerant emitted from the refrigerant compressor.

2. The climate control system of claim 1, wherein the controller is configured to adjust the adjustable internal volume based on a speed of sound through the refrigerant and the operating speed of the refrigerant compressor.

3. The climate control system of claim 1 or 2, wherein the controller is configured to adjust a volume of compressor lubricant that is collected in the adjustable resonator to adjust the adjustable volume.

4. The climate control system of claim 3, wherein the adjustable resonator includes a floating barrier that is configured to float on top of the volume of compressor lubricant in the adjustable resonator, and wherein the adjustable volume of the adjustable resonator is positioned vertically above the floating barrier;
optionally wherein the adjustable resonator is positioned along a vertically lower side of the discharge line.

5. The climate control system of any one of the preceding claims, wherein the adjustable resonator includes:
one or more vertically-spaced ports; and
one or more drain valves that are each in fluid communication with a corresponding one of the one or more vertically-spaced ports,
wherein the controller is communicatively coupled to the one or more drain valves, and is configured to actuate the one or more drain valves to adjust the volume of compressor lubricant that is collected in the adjustable resonator to adjust the adjustable volume.

6. The climate control system of any one of the preceding claims, wherein the adjustable resonator includes:
a piston; and
an actuator coupled to the piston,
wherein the controller is communicatively coupled to the actuator and is configured to adjust a position of the piston within the adjustable resonator via the actuator to adjust the adjustable volume.

7. The climate control system of claim 6, wherein the actuator comprises a linear actuator; and/or
wherein the resonator is positioned along a vertically upper side of the discharge line.

8. The climate control system of any one of the preceding claims, wherein the muffler assembly further comprises one or more radial resonators positioned along the discharge line, wherein each of the one or more radial resonators comprise a fixed volume that extends radially outward from an inner diameter of the discharge line and circumferentially about a longitudinal axis of the discharge line;
optionally wherein the one or more radial resonators comprises a plurality of radial resonators that are axially spaced from one another relative to the longitudinal axis, wherein each of the plurality of radial resonators includes a different, fixed volume.

9. A method comprising:
(a) operating a refrigerant compressor of a climate control system to discharge refrigerant into a discharge line;
(b) adjusting an adjustable volume of an adjustable resonator coupled to the discharge line based at least in part on an operating speed of the refrigerant compressor; and
(c) flowing refrigerant into the adjustable volume from the discharge line to attenuate a pressure pulsation emitted into the discharge line from the refrigerant compressor.

10. The method of claim 9,
wherein (b) comprises adjusting the adjustable volume based on the operating speed of the refrigerant compressor and a speed of sound through the refrigerant.

11. The method of claim 9 or 10, wherein (b) further comprises adjusting a volume of compressor lubricant that is collected into the adjustable resonator.

12. The method of claim 11, wherein (b) further comprises actuating one or more drain valves that to selectively drain compressor lubricant out of the adjustable resonator;
optionally wherein (b) further comprises moving a floating barrier vertically in the adjustable resonator.

13. The method of any one of claims 9-12, wherein (b) further comprises adjusting a position of a piston within the adjustable resonator;
optionally wherein (b) further comprises adjusting the position of the piston by use of a linear actuator.

14. The method of any one of claims 9-13, further comprising:
(d) attenuating one or more additional pressure pulsations emitted by the refrigerant compressor into the discharge line by use of one or more radial resonators positioned along the discharge line, each of the one or more radial resonators comprising a fixed volume that extends radially outward from an inner diameter of the discharge line and circumferentially about a longitudinal axis of the discharge line.

15. The method of claim 14, wherein (d) further comprises:
(d1) attenuating a first pressure pulsation of the one or more additional pressure pulsations with a first radial resonator of the one or more radial resonators; and
(d2) attenuating a second pressure pulsation of the one or more additional pressure pulsations with a second radial resonator of the one or more radial resonators,
wherein the first pressure pulsation has a first frequency and the second pressure pulsation has a second frequency that is different from the first frequency, and
wherein the first radial resonator has a first internal volume and the second radial resonator has a second internal volume that is different from the first internal volume.
